(19) Europäisches Patentamt
European Patent Office
Office européen des brevets

(11) EP 2 824 150 B1

(12) EUROPEAN PATENT SPECIFICATION

(45) Date of publication and mention of the grant of the patent:
**20.09.2017 Bulletin 2017/38**

(21) Application number: **14175849.0**

(22) Date of filing: **04.07.2014**

(51) Int Cl.:
***C09D 11/322*** *(2014.01)* ***C09D 11/38*** *(2014.01)*
***C09D 11/40*** *(2014.01)* ***C09D 11/16*** *(2014.01)*
***C09D 11/54*** *(2014.01)* ***C08K 5/17*** *(2006.01)*
***C08K 3/16*** *(2006.01)* ***C08K 3/28*** *(2006.01)*

(54) **Inkjet ink set and image forming method**

Tintenstrahltintensatz und Bilderzeugungsverfahren

Jeu d'encre à jet d'encre et procédé de formation d'images

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2013 JP 2013143527**
**19.02.2014 JP 2014030103**

(43) Date of publication of application:
**14.01.2015 Bulletin 2015/03**

(73) Proprietor: **FUJIFILM Corporation**
**Tokyo (JP)**

(72) Inventors:
- **Ooishi, Yasufumi**
**Ashigarakami-gun, Kanagawa 258-8577 (JP)**
- **Ito, Orie**
**Ashigarakami-gun, Kanagawa 258-8577 (JP)**
- **Teramae, Shinichi**
**Ashigarakami-gun, Kanagawa 258-8577 (JP)**

(74) Representative: **Klunker IP**
**Patentanwälte PartG mbB**
**Destouchesstraße 68**
**80796 München (DE)**

(56) References cited:
**EP-A1- 2 366 744**
**WO-A1-2013/008626**
**US-A1- 2011 211 012**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 150 B1

Printed by Jouve, 75001 PARIS (FR)

## Description

BACKGROUND OF THE INVENTION

[Technical Field]

The present invention relates to an inkjet ink set and an image forming method.

[Background Art]

As an image forming method using an inkjet method, a so-called super drop method is known as a method with excellent gradation reproducibility. A super drop method is a method in which at least two primary droplets jetted from a liquid jetting head are caused to merge midflight, and to impact a recording medium as a single secondary droplet. Such a method enables the size of the secondary liquid droplets that impact the recording medium to be changed by controlling the number of individual primary liquid droplets that are merged, enabling rich gradation to be reproduced. There are proposals for improvements to jetting heads according to such super drop methods (see for example Japanese Patent Application Laid-Open (JP-A) No. 2012-250477).
As an inkjet ink set, a known ink set includes: an ink composition including a pigment, polymer particles having a glass transition temperature of 70°C or above, and a volume average particle size of 70 nm or less, and a water-soluble polymerizable compound polymerized by actinic energy radiation; and a treatment liquid including an aggregating agent that aggregates components in the ink composition (for example an acidic compound such as malonic acid) (see, for example JP-A No. 2011-46872). It is stated therein that a self-dispersing polymer with an acid value of from 25 mg KOH/g to 70 mg KOH/g is preferable as polymer particles included in the ink composition of such an ink set. It is moreover stated that this is preferable since a stable dispersion state in water, included as a solvent, is formed by a product of partially neutralizing some or all anionic dissociable groups such as carboxyl groups included in the self-dispersing polymer, using an alkali metal hydroxide such as sodium hydroxide, or an organic amine such as triethanolamine.
A known image forming method employs a treatment liquid with a pH of from pH 0.5 to pH 2.0, including water, an organic acid compound, and an inorganic acid compound. Excellent ink aggregation properties are achieved, uneven glossiness of image portions is suppressed, and adverse impact of the treatment liquid to the recording medium is also suppressed (see, for example, JP-ANo. 2012-196822).

SUMMARY OF INVENTION

According to an aspect of the present invention, an inkjet ink set including: an ink composition including water, a colorant, polymer particles having a glass transition temperature of 90°C or higher, an organic amine and an inorganic salt; and a treatment liquid that includes an acidic compound and causes aggregation when the treatment liquid comes into contact with the ink composition, and an image forming method using the same are provided. The inkjet ink set and an image forming method using the same provide excellent stability and jetting ability of the ink composition, and an image having image quality with suppressed formation of satellite droplets.

[Technical Problem]

In inkjet ink sets, ink compositions used in combination with treatment liquids including acidic compounds as aggregating agents are pH regulated so as to exhibit alkalinity. When such ink compositions are used to form images on recording media including a base paper and a coating that includes an inorganic pigment (also referred to below as "coated paper"), via an ink jet method, for continuous image formation performed in large volumes, as the volume increases, accumulation of sediment increases in the jetting head nozzles such that the jetting stability of the ink composition from the nozzles is decreased. This leads to aggregated matter building up at the jetting head nozzles so as to cause a decrease in the jetting stability of the ink composition from the nozzles. Such a decrease in jetting stability may be attributable to carbon dioxide gas buildup, since acid in the treatment liquid, applied to make components in the ink composition aggregate, reacts with components in the coated paper to generate carbon dioxide gas in some cases.
It is known that the reduction in jetting stability is ameliorated by including an organic amine such as, for example, triethanolamine in the ink composition as a pH buffer. A reduction in jetability, caused by components of an ink composition aggregating at the nozzles of ink jetting heads of inkjet recording apparatus, seldom occurs for ink compositions including an organic anime as a pH buffer, even when inkjet recording is performed continuously in large amounts. Excellent jetting stability is therefore known. In particular, remarkable jetting stability is known to be exhibited in cases in which coated paper is used as the recording medium.
However, a new issue emerges when such an inkjet ink set is used for image forming by inkjet recording apparatus

according to a super drop method in that the projectability of the ink composition decreases, and the quality of the recorded image decreases. Such decreases in image quality have been ascertained to result from extraneous satellite droplets forming when at least two primary liquids jetted from the jetting head merge midflight and form a single secondary droplet (also referred to below as "main droplet"), and such satellite droplets impacting at positions separated from the position where the main droplet impacted.

In consideration of the above circumstances, the invention addresses provision of an inkjet ink set and an image forming method that exhibit excellent ink composition stability and j etability, and also suppress the generation of satellite droplets.

Specific means for addressing the above problems are as follows.

<1> An inkjet ink set including: an ink composition including water, a colorant, polymer particles having a glass transition temperature of 90°C or higher, an organic amine and an inorganic salt; and a treatment liquid that includes an acidic compound and causes aggregation when the treatment liquid comes into contact with the ink composition.

<2> The inkjet ink set according to the item <1>, wherein the organic amine is an aminoalcohol.

<3> The inkjet ink set according to the item <1> or the item <2>, wherein the organic amine is a triethanolamine.

<4> The inkjet ink set according to anyone of the items <1> to <3>, wherein the inorganic salt is at least one selected from the group consisting of an alkali metal salt and an alkali earth metal salt.

<5> The inkjet ink set according to anyone of the items <1> to <4>, wherein the inorganic salt is at least one selected from the group consisting of a hydrochloride salt and a nitrate salt.

<6> The inkjet ink set according to anyone of the items <1> to <5>, wherein the inorganic salt is at least one selected from the group consisting of lithium chloride, lithium nitrate, potassium chloride and potassium nitrate.

<7> The inkjet ink set according to anyone of the items <1> to <6>, wherein the polymer particles have a glass transition temperature of 120°C or higher.

<8> The inkjet ink set according to anyone of the items <1> to <7>, wherein a pH of the ink composition is in a range of from 7.5 to 13.0 and a pH of the treatment liquid is in a range of from 0.1 to 4.0.

<9> The inkjet ink set according to anyone of the items <1> to <8>, wherein a pH of the ink composition is in a range of from 7.5 to 13.0 and a pH of the treatment liquid is in a range of from 0.1 to 0.5.

<10> The inkjet ink set according to anyone of the items <1> to <9>, wherein the ink composition further includes a polymerizable compound.

<11> The inkjet ink set according to the item <10>, wherein the polymerizable compound is a (meth)acrylamide compound represented by the following Formula (1).

Formula (1)

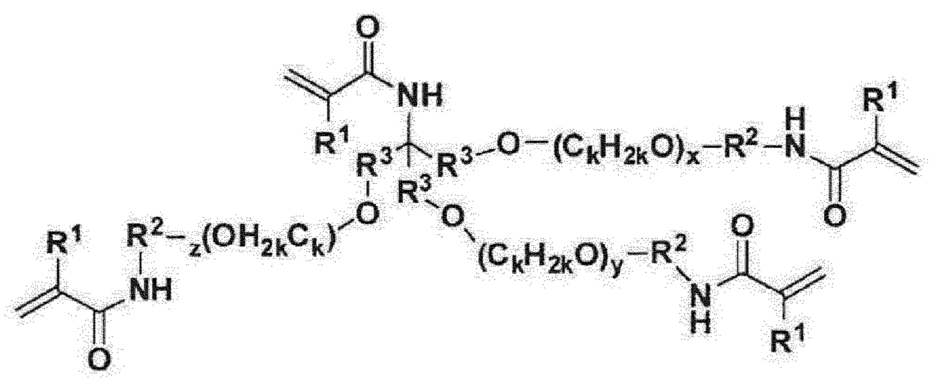

In Formula (1), $R^1$ represents a hydrogen atom or a methyl group; $R^2$ represents a straight chain or branched alkylene group having from 2 to 4 carbon atoms, provided with a structure in which the oxygen atom and the nitrogen atom, which are bound to both ends of the $R^2$, are not bound to the same carbon atom in $R^2$; $R^3$ represents a bivalent linking group; k represents 2 or 3; each of x, y, and z independently represents an integer from 0 to 6, and the sum x + y + z equals a value from 0 to 18.

<12> The inkjet ink set according to the item <11>, wherein the ink composition further includes a polymerization initiator.

<13> The inkjet ink set according to anyone of the items <1> to <12>, wherein the ink set is applied onto a recording medium including a base paper and a coat layer containing an inorganic pigment to form an image.

<14> An image forming method including: applying the ink composition of the inkjet ink set according to anyone of the items <1> to <13> onto a recording medium including a base paper and a coat layer containing an inorganic pigment to form an image by an inkjet method; and applying the treatment liquid of the inkjet ink set onto the recording medium.
<15> The image forming method according to the item <14>, wherein the ink composition is applied after the treatment liquid has been applied onto the recording medium.

[Advantageous Effects of Invention]

According to the invention, an inkjet ink set and an image forming method are provided that have excellent stability and jetting properties of an ink composition, and that suppress satellite droplets from occurring.

BRIEF DESCRIPTION OF THE DRAWINGS

Fig. 1 is a schematic configuration diagram showing a constitutional example of the structure of an inkjet recording device for carrying out an image formation.

DETAILED DESCRIPTION OF THE INVENTION

Detailed explanation follows regarding an inkjet ink set and an image forming method of the invention.
In the present specification, numerical ranges represented with "to" indicate ranges that include the respective numerical values appearing before and after "to" as the minimum value and the maximum value.

Inkjet Ink Composition

An ink composition according to the invention includes water, a colorant, polymer particles having a glass transition temperature of 90°C or above, an organic amine, and an inorganic salt.
The reason the inkjet ink set according to the invention achieves excellent stability and jetting properties of the ink composition, and suppresses satellite droplets from occurring, is not entirely clear, however it is hypothesized to be due to the following reason.
In the ink composition according to the invention, buildup of aggregated matter at the vicinity of the jetting openings of the jetting head, accompanying the generation of carbon dioxide gas, is suppressed due to the ink composition including the organic amine. There is little buildup of aggregated matter at the jetting openings even when images have been formed over a long period of time, and/or formed on a large volume of recording medium, thereby securing excellent jetting stability over a long period of time.
The ink composition according to the invention includes polymer particles, having a glass transition temperature of 90°C or above, and an inorganic salt, and so excellent liquid release occurs between the jetting openings and the ink composition when the ink composition is being jetted as primary droplets from the jetting openings of the jetting head, leading to jetted primary droplets that are close to spherical in shape, and thereby suppressing generation of extraneous mist when two or more droplets merge. Moreover, immediate aggregation occurs on impact to the recording medium, suppressing secondary droplets from scattering on impact, with these two effects combining to suppress the formation of satellite droplets. Moreover, it has been confirmed that the ink composition according to the invention retains its initial viscosity even after being stored for a long period of time, giving excellent storage stability.
Explanation follows, in sequence, regarding the polymer particles having a glass transition temperature of 90°C or above, the organic amine, and the inorganic salt, and then explanation follows regarding the water and the colorant.
Polymer Particles Having a Glass Transition Temperature of 90°C or Above The ink composition according to the invention includes at least one type of polymer particles having a glass transition temperature of 90°C or above (also referred to below as the "specific polymer particles").
In contrast to a polymer dispersant (a polymer dispersant that coats at least one part of the pigment), described later, the specific polymer particles are particles that are present separate to the pigment, and, more specifically, are particles configured from a polymer having a glass transition temperature of 90°C or above (also referred to below as the "specific polymer"). The ink composition according to the invention effectively suppresses satellite droplets from occurring due to the included polymer particles having a glass transition temperature of 90°C or above. Moreover, the rubbing resistance of images is improved, and image unevenness is suppressed. The upper limit to the glass transition temperature of the polymer particles is preferably 250°C.
The glass transition temperature of the polymer particles is preferably in a range of from 120°C to 230°C.
For example, in cases in which an image is formed by applying the treatment liquid, described later, together with the ink composition onto the recording medium, the specific polymer particles have the function of destabilizing dispersion

and aggregating in the ink composition when in contact with the treatment liquid, or in contact with a region where treatment liquid has dried, and the function of immobilization the ink composition by increasing viscosity. The rubbing resistance of images is thereby further improved and image unevenness further suppressed. Moreover, the adhesion of the ink composition to the recording medium and the scratch resistance of images are further improved.

The glass transition temperature (Tg) of the specific polymer particles can be controlled as appropriate by generally-used methods. For example, the glass transition temperature (Tg) of the specific polymer particles can be controlled in a desired range by selecting as appropriate a type of a monomer (polymerizable compound) that forms the specific polymer particles, a constituent ratio of the substituent on the monomer, a molecular weight of the polymer molecule that forms the specific polymer particles, or the like.

For the glass transition temperature (Tg) of the polymer that forms the specific polymer particles, a measured Tg obtained by actual measurement is applied in the invention.

Specifically, the measured Tg means a value measured under usual measurement conditions using a differential scanning calorimeter (DSC) EXSTAR6220 (trade name) manufactured by SII Nanotechnology Inc. However, in a case in which the measurement is difficult due to degradation of the polymer or the like, a calculated Tg obtained by calculation according to the following calculation formula is applied. The calculated Tg is obtained by calculation according to the following Equation (1).

$$1/Tg = \Sigma (X_i/Tg_i) \qquad (1)$$

Here, a polymer as a calculation target is assumed that n kinds of monomer components of i = 1 to n are copolymerized. Xi represents the weight fraction ($\Sigma X_i = 1$) of the i-th monomer, and $Tg_i$ represents the glass transition temperature (absolute temperature) of a homopolymer of the i-th monomer. E represents the sum of i = 1 to n. As the value ($Tg_i$) of the glass transition temperature of a homopolymer of each monomer, the values described in "Polymer Handbook" (3rd Edition) (written by J. Brandrup and E. H. Immergut (Wiley-Interscience, 1989)) are employed.

The specific polymer particles are preferably polymer particles obtained by a phase inversion emulsification method, and more preferably particles of a self-dispersing polymer (self-dispersing polymer particles) described below.

Here, the term "self-dispersing polymer" refers to a water-insoluble polymer that, when dispersed by a phase inversion emulsification method, can get into a dispersed state in an aqueous medium, in the absence of a surfactant, due to functional groups (particularly, acid groups or salts thereof) of the polymer itself.

The scope of the term "dispersed state" used herein includes both an emulsified state (emulsion) in which a water-insoluble polymer in the liquid state is dispersed in an aqueous medium and a dispersed state (suspension) in which a water-insoluble polymer in the solid state is dispersed in an aqueous medium.

Further, the term "water-insoluble" means that the amount of dissolution is 5.0 parts by mass or less with respect to 100 parts by mass of water (at 25°C).

As a phase inversion emulsification method there is, for example, a method in which the product of dissolving or dispersing a polymer in a solvent (for example a water-miscible solvent) is added to water as it is, without the addition of a surfactant, and in a state in which a salt-forming group of the polymer (for example an acid group) is neutralized, stirring, mixing, and then, after removing the solvent, obtaining an aqueous dispersion in an emulsified or dispersed state.

As the self-dispersing polymer particles, those having Tg of 90°C or higher selected from the self-dispersing polymer particles described in paragraphs 0090 to 0121 of JP-A No. 2010-64480 and paragraphs 0130 to 0167 of JP-A No. 2011-068085 can be used.

The polymer configuring the specific polymer particles (the specific polymer, the same applies below) preferably has at least one out of a structural unit having an aromatic group, or a structural unit having an alicyclic group. Herein, alicyclic is synonymous with cycloaliphatic.
Including such a structural unit enables the strength (for example the scratch resistance and the blocking resistance) of the formed image to be further improved.
Note that in the present specification, the structural unit preferably included in the specific polymer is also sometimes referred to as a "structural component".

Structural Unit Having an Aromatic Group

Examples of the structural unit having an aromatic group include a structural unit having a phenyl group, a structural unit having a benzyl group, a structural unit having a phenoxy group, and a structural unit having a phenethyl group. Preferable from among these is a structural unit having a benzyl group or a structural unit having a phenoxy group (with a structural unit having a phenoxyethyl group being preferable).

The structural unit having an aromatic group is preferably a structural unit derived from a monomer having an

aromatic group (also referred to below as an "aromatic group-containing monomer").
It is preferable that the aromatic group-containing monomer is a monomer having an aromatic group derived from an aromatic hydrocarbon, and an ethylenically unsaturated bond. The aromatic group-containing monomer may be employed singly, or in a combination of two or more thereof.
Examples of the aromatic group-containing monomer include aromatic group-containing (meth)acrylate monomers (such as a phenoxyethyl(meth)acrylate, a benzyl(meth)acrylate, or a phenyl(meth)acrylate), and styrenic monomers. Out of these, from the viewpoints of balance between the hydrophilicity and hydrophobicity of the polymer chain, and ink fixing properties, an aromatic group-containing (meth)acrylate monomer is preferable, at least one (meth)acrylate selected from the group consisting of a phenoxyethyl(meth)acrylate, a benzyl(meth)acrylate and a phenyl(meth)acrylate is more preferable, and a phenoxyethyl(meth)acrylate or a benzyl(meth)acrylate is still more preferable.
Note that the term "(meth)acrylate" means acrylate or methacrylate.

(Structural unit having alicyclic group)

A structural unit having an alicyclic group is preferably a structural unit derived from a monomer having an alicyclic group (also referred as an alicyclic group containing monomer).

The alicyclic group containing monomer is preferably a monomer having an alicyclic group and an ethylenically unsaturated bond, and more preferably a (meth)acrylate having an alicyclic group (also referred as an alicyclic (meth)acrylate).

The alicyclic (meth)acrylate is a compound including a structural site derived from (meth)acrylic acid and a structural site derived from alcohol, and having a structure containing at least one unsubstituted or substituted alicyclic hydrocarbon group (cyclic aliphatic group) in the structural site derived from alcohol. The alicyclic hydrocarbon group may be the structural site derived from alcohol itself, or may be linked to the structural site derived from alcohol via a linking group.

The alicyclic hydrocarbon group is not particularly limited so long as it contains a cyclic non-aromatic hydrocarbon group, and may be a monocyclic hydrocarbon group, a bicyclic hydrocarbon group, or a polycyclic hydrocarbon group having three or more rings.

Examples of the alicyclic hydrocarbon group include a cycloalkyl group such as a cyclopentyl group or a cyclohexyl group, a cycloalkenyl group, a bicyclohexyl group, a norbornyl group, an isobornyl group, a dicyclopentanyl group, a dicyclopentenyl group, an adamantyl group, a decahydronaphthalenyl group, a perhydrofluorenyl group, a tricyclo[5.2.1.02,6]decanyl group, a bicyclo[4.3.0]nonane, and the like.

The alicyclic hydrocarbon group may be further substituted with a substituent. Examples of the substituent include an alkyl group, an alkenyl group, an aryl group, an aralkyl group, an alkoxy group, a hydroxyl group, a primary amino group, a secondary amino group, a tertiary amino group, an alkyl- or arylcarbonyl group, a cyano group, and the like.

The alicyclic hydrocarbon group may further form a condensed ring.

The alicyclic hydrocarbon group according to the invention preferably has 5 to 20 carbon atoms in the alicyclic hydrocarbon group moiety, from the viewpoint of viscosity or solubility.

Specific examples of the alicyclic (meth)acrylate according to the invention will be shown below, but the invention is not limited to these.

Examples of monocyclic (meth)acrylate include cycloalkyl (meth)acrylates having a cycloalkyl group having 3 to 10 carbon atoms, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, and cyclodecyl (meth)acrylate.

Examples of bicyclic (meth)acrylate include isobornyl (meth)acrylate, norbornyl (meth)acrylate, and the like.

Examples of tricyclic (meth)acrylate include adamantyl (meth)acrylate, dicyclopentanyl (meth)acrylate, dicyclopentenyloxyethyl (meth)acrylate, and the like.

These may be used alone, or as mixtures of two or more kinds thereof.

Among these, at least one of the bicyclic (meth)acrylate and the polycyclic (meth)acrylate having three or more rings is preferable, and at least one selected from isobornyl (meth)acrylate, adamantyl (meth)acrylate and dicyclopentanyl (meth)acrylate is more preferable, from the viewpoints of the dispersion stability of the self-dispersing polymer particles, and fixability and blocking resistance of an image formed.

In the polymer configuring the specific polymer particles of the invention, the total content of the structural units having an aromatic group, and the structural units having an alicyclic group, is preferably from 3% by mass to 95% by mass. When the total content is within this range, the self-emulsification ability or the dispersion state stability is improved, and suppression of a rise in ink viscosity is enabled.

Moreover, in consideration of the removability of the ink composition from the nozzles (maintainability) and the re-jetting properties after removal, the specific polymer particles more preferably have a structural unit having an aromatic group.

A more preferable form of the specific polymer particles is a form in which the polymer configuring the specific polymer particles includes a structural unit having an aromatic group, and in which the content of the structural unit having an aromatic group is from 3% by mass to 45% by mass (more preferably from 3% by mass to 40% by mass, and particularly preferably from 5% by mass to 30% by mass), with respect to the total amount of polymer.
For such a form, the glass transition temperature of the specific polymer particles is more easily adjusted to 90°C or above.

Hydrophilic Structural Unit

The polymer configuring the specific polymer particles preferably includes a hydrophilic structural unit from the viewpoint of dispersability in the ink composition (the self-dispersability in the case of self-dispersing polymer particles).
Preferably the hydrophilic structural unit is a structural unit derived from a monomer having a hydrophilic group (also referred to below as a "hydrophilic group-containing monomer"). In such cases, the hydrophilic structural unit may be derived from one hydrophilic group-containing monomer, or may be derived from two or more hydrophilic group-containing monomers.
The hydrophilic group may be a dissociable group, and may be a nonionic hydrophilic group, but is not particularly limited.
From the viewpoint of promoting self-dispersion and from the viewpoint of the stability of the emulsified or dispersed state that is formed, the hydrophilic group is preferably a dissociable group, and more preferably an anionic dissociable group. Examples of the dissociable group include a carboxyl group, a phosphoric acid group, and a sulfonic acid group. A carboxyl group is preferable from among these, from the viewpoint of fixing properties when configured in the ink composition.
From the viewpoints of self-dispersibility and aggregation ability of ink, the hydrophilic group-containing monomer is preferably a dissociable group-containing monomer, and is preferably a dissociable group-containing monomer having a dissociable group and an ethylenically unsaturated bond.
Examples of the dissociable group-containing monomer include an unsaturated carboxylic acid monomer, an unsaturated sulfonic acid monomer, and an unsaturated phosphoric acid monomer.
Specific examples of the unsaturated carboxylic acid monomer include (meth)acrylic acid, crotonic acid, itaconic acid, maleic acid, fumaric acid, citraconic acid, and 2-methacryloyloxymethylsuccinic acid.
Specific examples of the unsaturated sulfonic acid monomer include styrenesulfonic acid, 2-acrylamide-2-methylpropane sulfonic acid, 3-sulfopropyl (meth)acrylate, and bis-(3-sulfopropyl) itaconate.
Examples of the unsaturated phosphoric acid monomer include vinyl phosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.
Among the above monomers having the dissociable group, unsaturated carboxylic acid monomers are preferable, and (meth)acrylic acids are more preferable, in consideration of dispersion stability and ejection stability.
There are no particular limitations to the content of the hydrophilic structural unit in the polymer configuring the specific polymer particles. From the viewpoint of dispersion stability, the content is preferably from 2% by mass to 30% by mass, more preferably from 5% by mass to 20% by mass, and particularly preferably from 5% by mass to 15% by mass, with respect to the total amount of the specific polymer particles.

Structural Unit Having an Alkyl Group

From the viewpoints of flexibility of the polymer framework and ease of glass transition temperature (Tg) control, the polymer configuring the specific polymer particles preferably includes a structural unit having an alkyl group.
There are preferably from 1 to 4 carbon atoms in the alkyl group in the structural unit having an alkyl group.
The structural unit having an alkyl group is preferably a structural unit derived from a monomer having an alkyl group (also referred to below as an "alkyl group-containing monomer").
Examples of the alkyl group-containing monomer include alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate; the hydroxyl group-containing ethylenically unsaturated monomer such as hydroxylmethyl (meth)acrylate, and phenoxyethyl (meth)acrylate; stryrenes such as styrene, $\alpha$-methylstyrene, and chlorostyrene; dialkylaminoalkyl (meth)acrylates such as dimethylaminoethyl (meth)acrylate; N-hydroxyalkyl (meth)acrylamides such as N-hydroxymethyl (meth)acrylamide, N-hydroxyethyl (meth)acrylamide, and N-hydroxybutyl (meth)acrylamide; N-alkoxyalkyl (meth)acrylamides such as N-methoxymethyl (meth)acrylamide, N-ethoxymethyl (meth)acrylamide, N-(n-, iso-)butoxymethyl (meth)acrylamide, N-methoxyethyl (meth)acrylamide, N-ethoxyethyl (meth)acrylamide, and N-(n-, iso-)butoxyethyl (meth)acrylamide; and the like. Among the above, alkyl (meth)acrylates are preferable, alkyl (meth)acrylates including an alkyl group having 1 to 4 carbon atoms are more preferable, methyl (meth)acrylate or ethyl (meth)acrylate is even more preferable, and methyl (meth)acrylate is particularly

preferable.

There are no particular limitations to the content of the structural unit having an alkyl group in the polymer configuring the specific polymer particles. From the viewpoint of dispersion stability, the content is preferably from 5% by mass to 90% by mass, more preferably from 30% by mass to 90% by mass, still more preferably from 40% by mass to 90% by mass, particularly preferably from 50% by mass to 90% by mass, and most preferably from 60% by mass to 85% by mass, with respect to the total amount of the specific polymer particles.

The polymer configuring the specific polymer particles may include a structural unit other than the structural units described above, if required.

A preferable form of copolymerization ratio for the polymer configuring the specific polymer particles is the following form, from the viewpoints of facilitating adjustment of the glass transition temperature to 90°C or above, and of maintaining excellent dispersion stability.

Namely, the preferable form from the above viewpoints is that the polymer configuring the specific polymer particles is in a form including structural units having an aromatic group (preferably a benzyl group, or a phenoxy group) at a copolymerization ratio of from 3% by mass to 45% by mass (more preferably from 3% by mass to 40% by mass, and particularly preferably from 5% by mass to 30% by mass), hydrophilic structural units at a copolymerization ratio of from 2% by mass to 30% by mass (more preferably from 5% by mass to 20% by mass, and particularly preferably from 5% by mass to 15% by mass), and structural units including an alkyl group at a copolymerization ratio of from 5% by mass to 90% by mass (more preferably from 30% by mass to 90% by mass, still more preferably from 50% by mass to 90% by mass, and particularly preferably from 60% by mass to 85% by mass).

A more preferable form of the specific polymer particles is a form including at least one of structural units derived from a benzyl(meth)acrylate or structural units derived from a phenoxyethyl(meth)acrylate at a copolymerization ratio of from 3% by mass to 45% by mass (more preferably from 3% by mass to 40% by mass, and particularly preferably from 5% by mass to 30% by mass), structural units derived from (meth)acrylate at a copolymerization ratio of from 2% by mass to 30% by mass (more preferably from 5% by mass to 20% by mass, and particularly preferably from 5% by mass to 15% by mass), or structural units derived from alkyl(meth)acrylate at a copolymerization ratio of from 40% by mass to 90% by mass (more preferably from 50% by mass to 90% by mass, and particularly preferably from 60% by mass to 85% by mass).

The molecular weight of the polymer that forms the specific polymer particles, in terms of weight average molecular weight, is preferably in a range of from 3,000 to 200,000, and more preferably from 5,000 to 150,000, and even more preferably from 10,000 to 100,000. When the weight average molecular weight is 3,000 or more, the amount of water-soluble components can be effectively inhibited. Further, when the weight average molecular weight is 200,000 or less, the self-dispersion stability can be enhanced.

The weight average molecular weight of the polymer that forms the specific polymer particles is measured by using a gel permeation chromatography (GPC). HLC-8020 GPC (trade name, manufactured by Tosoh Corp.) is used for the GPC, and TSKgeL Super Multi pore HZ-H (trade names, all manufactured by Tosoh Corp.) are used as the columns and are connected in a series of three. The eluent liquid was THF (tetrahydrofuran). For the conditions, the sample concentration is 0.35% by mass, the flow rate is 0.35 ml/min, the amount of sample injection is 10 μl, the measurement temperature is 40°C, and an RI detector is used. A calibration curve is produced from 8 samples of the 2standard sample TSK standard, polystyrene": "F-40", "F-20", "F-4", "F-1", "A-5000", "A-2500", "A-1000" and "n-propylbenzene" (trade names) manufactured by Tosoh Corp.

The average particle size of the specific polymer particles of the invention (and in particular self-dispersing polymer particles) is preferably a volume average particle size in a range of from 10 nm to 400 nm, more preferably in a range of from 10 nm to 200 nm, still more preferably in a range of from 10 nm to 100 nm, and particularly preferably in a range of from 10 nm to 50 nm. The manufacturability is improved when the volume average particle size is 10 nm or greater. The storage stability is raised when the volume average particle size is 400 nm or less. With regards to the particle size distribution of the polymer particles, there are no particular limitations thereto, and either polymer particles with a wide particle size distribution, or polymer particles with a monodisperse particle size distribution may be employed. A mixture of two or more types of polymer particles may also be employed. Note that the average particle size and particle size distribution of the specific polymer particles is derived from a measurement of volume average particle size using a dynamic light scattering method, employing a nanotrac particle size distribution analyzer, UPA-EX150 (trade name, manufactured by Nikkiso Co., Ltd.).

Although not particularly limited, the content (the total content for cases in which two or more types of specific polymer particles are included) in the ink composition of the above specific polymer particles (preferably self-dispersing polymer particles) is preferably from 0.3% by mass to 10.0% by mass, more preferably from 0.5% by mass to 7.0% by mass, and particularly preferably from 1.0% by mass to 5.0% by mass, with respect to the total amount of the ink composition.

Setting the above content to 0.3% by mass or greater enables the rubbing resistance of images to be further improved, and image unevenness to be further suppressed.

Setting the above content to 10.0% by mass or less enables the ink jetting ability to be further improved, and is also advantageous from the viewpoint of suppressing precipitates from arising in low temperature environments.

Organic Amine

The ink composition according to the invention includes an organic amine.
Even when carbon dioxide gas is generated when treatment liquid including an acidic compound makes contact with the coating layer of a coated paper, the organic amine sequesters the carbon dioxide gas, and so functions to prevent the buildup of aggregated ink matter in the vicinity of jetting openings of jetting heads. The initial jetting ability of the ink composition is thereby maintained stably over a long period of time.
Although the organic amine of the invention is not particularly limited, an amino alcohol is preferable from the viewpoint of improving the carbon dioxide gas resistance. Specific examples of the amino alcohol include aminoethoxyethanol, isopropanolamine, diethanolamine, triethanolamine, monoethanolamine, N,N-dimethyl ethanol amine, N,N-diethylethanolamine, N,N-dibutylethanolamine, N-methylethanolamine, N-methyl diethanolamine, N-(2-aminoethyl)ethanolamine, 2-amino-2-ethyl-1,3-propanediol, and tris(hydroxymethyl)aminomethane.
There are preferably many hydroxide groups in the amino alcohol, from the viewpoint of raising the carbon dioxide gas resistance. From this viewpoint, dimethanolamine, diethanolamine, diisopropanolamine, trimethanolamine, triethanolamine, triisopropanolamine, and tris(hydroxymethyl)aminomethane are preferable, and from out of these trimethanolamine, triethanolamine, and triisopropanolamine are more preferable.
The organic amine may be employed singly, or in a combination of two or more thereof.
Although there are no particular limitations to the content (the total content when there are two or more organic amines included) of the organic amine in the ink composition of the invention, from the viewpoint of improving the carbon dioxide gas resistance in a range that does not damage the ink properties, the content of the organic amine is preferably from 0.05% by mass to 5% by mass, more preferably from 0.05% by mass to 3% by mass, and particularly preferably from 0.1 % by mass to 1% by mass, with respect to the total mass of the ink composition.

Inorganic Salt

The ink composition of the invention includes an inorganic salt.
The ink composition includes the polymer particles having a glass transition temperature of 90°C or above and the inorganic salt, and accordingly excellent liquid release of the ink composition from jetting openings occurs when the ink composition is jetted as primary droplets from jetting openings of a jetting head. The jetted primary droplets are accordingly close to spherical in shape, thereby suppressing generation of extraneous mist when two or more droplets merge, and as a result the formation of satellite droplets is suppressed. Immediate aggregation also occurs on impact to the recording medium, suppressing secondary droplets from scattering on impact.
Altough there are no particular limitations to the inorganic salt of the invention, examples thereof include salts of alkali metals in the first group of the periodic table (such as potassium or lithium), and salts of alkaline earth metals in the second group of the periodic table (such as calcium or magnesium). The salt is preferably a chloride, a hydrochloride salt or a nitrate salt. Among these, from the viewpoint of exhibiting the excellent effect of suppressing formation of satellite droplets, alkali metals salts are preferable, and lithium chloride, lithium nitrate, potassium chloride, and potassium nitrate are particularly preferable. The inorganic salt may be employed singly, or in a combination of two or more thereof. There are no particular limitations to the content (the total content when two or more inorganic salt are employed) of the inorganic salt in the ink composition according to the invention. The content of the inorganic salt is preferably from 0.01% by mass to 1% by mass, more preferably from 0.03% by mass to 0.5% by mass, and particularly preferably from 0.05% by mass to 0.1% by mass, with respect to the total amount of ink composition. Moreover, since an advantage of stabilizing jetting can be obtained, the mass ratio of the inorganic salt to the organic amine, namely the ratio of inorganic salt/organic amine, is preferably in a range of from 1/50 to 1/1, and more preferably in a range of from 1/10 to 1/3.
In the ink composition according to the invention, from the viewpoint of easily obtaining both the effect of suppressing the generation of aggregated matter thought to be caused by carbon dioxide gas, and the effect of suppressing generation of satellite droplets, cases in which the content of the organic amine in the ink composition is 0.05% by mass or greater, the content of the polymer particles is 0.5% by mass or greater, and the content of the inorganic salt is 0.01% or greater are preferable. It is more preferable for the content of the organic amine in the ink composition to be from 0.05% by mass to 0.1% by mass, the content of the polymer particles to be from 0.75% by mass to 15% by mass, and the content of the inorganic salt to be from 0.01% to 0.5% by mass. It is particularly preferable for the content of the organic amine in the ink composition to be from 0.1 % by mass to 1% by mass, the content of the polymer particles to be from 1% by mass to 10% by mass, and the content of the inorganic salt to be from 0.05% to 0.1% by mass.

Water

The ink composition according to the invention includes water.

Although there are no particular limitations to the content of water in the ink composition, the content may be 50% by mass or greater.

There is generally a tendency for precipitates to arise readily in ink compositions with a content of water of 50% by mass or greater.

However, as stated above, the ink composition according to the invention is capable of suppressing precipitates from arising even in low temperature environments.

The ink composition according to the invention may therefore include water at 50% by mass or greater.

The content of water in the ink composition is preferably from 50% by mass to 80% by mass, is more preferably from 50% by mass to 75% by mass, and still more preferably from 50% by mass to 70% by mass, with respect to the total amount of ink composition.

Colorant

The ink composition of the invention includes at least one colorant.

Although not particularly limited, the colorant may be a pigment or a dye.

Pigment

The pigment is not particularly limited, and may be appropriately selected depending on the purpose. For example, the pigment may be either an organic pigment, or an inorganic pigment. It is preferable from the viewpoint of ink colorability that the pigment is virtually insoluble, or poorly soluble, in water.

Examples of the organic pigment include an azo pigment, a polycyclic pigment, a dye chelate, a nitro pigment, a nitroso pigment, and aniline black. An azo pigment, a polycyclic pigment, and the like are more preferable from among these. Examples of the inorganic pigment include titanium oxide, iron oxide, calcium carbonate, barium sulfate, aluminum hydroxide, barium yellow, cadmium red, chrome yellow, and carbon black. Carbon black is particularly preferable from among these.

When the organic pigment is employed, the average particle size of the organic pigment is preferably small from the viewpoint of transparency/color reproducibility, and preferably large from the viewpoint of light fastness. From the viewpoint of achieving both of these aims, the average particle size is preferably from 10 nm to 200 nm, more preferably 10 nm to 150 nm, and still more preferably from 10 nm to 120 nm. Regarding the particle size distribution of the organic pigment, there are no particular limitations thereto, and an organic pigment with a wide particle size distribution may be employed, and an organic pigment with a monodisperse particle size distribution may also be employed. A mixture of two or more organic pigments that each have a monodisperse particle size distribution may also be employed.

Dispersant

The ink composition according to the invention is preferably one in which a pigment is dispersed by a dispersant.

The pigment dispersant may be either a polymer dispersant, or a surfactant dispersant with a low molecular weight. The polymer dispersant may be either a water-soluble dispersant, or a water insoluble dispersant.

Examples of surfactant dispersants with a low molecular weight that may be employed include the known surfactant dispersants with a low molecular weight described in paragraphs [0047] to [0052] in JP-ANo. 2011-178029.

Among polymer dispersants, an example of a water-soluble dispersant is a hydrophilic macromolecular compound. Examples of natural hydrophilic macromolecular compounds include: macromolecules of plant origin such as gum arabic, gum tragacanth, guar gum, karaya gum, locust bean gum, arabinogalactan, pectin, or quince seed starch; seaweed-based macromolecules such as alginate, carrageenan, or agar; animal-based macromolecules such as gelatin, casein, albumin, or collagen; and microbial macromolecules such as xanthan gum or dextran.

Examples of hydrophilic macromolecular compounds derived by modifying natural products as raw materials include: cellulose-based macromolecules such as methyl cellulose, ethyl cellulose, hydroxyethyl cellulose, hydroxypropyl cellulose, or carboxymethyl cellulose; starch-based macromolecules such as sodium starch glycolate or sodium starch phosphate ester; and seaweed-based macromolecules such as sodium alginate or propylene glycol alginate.
In addition, examples of synthetic hydrophilic macromolecular compounds include: vinyl-based macromolecules such as polyvinyl alcohol, polyvinylpyrrolidone, or polyvinyl methyl ether; acrylic-based resins such as non-crosslinked polyacrylamide, polyacrylic acid or alkali metal salts thereof, or water-soluble styrene acrylic resin; water-soluble styrene maleic acid resin; water-soluble vinyl naphthalene acrylic resin; water-soluble vinyl naphthalene maleic acid resin; polyvinylpyrrolidone; polyvinyl alcohol; alkali metal salts of β-naphthalene sulfonic acid-formalin condensates; macromolecular compounds having a salt of a cationic functional group, such as a quaternary ammonium or an amino group, in a side chain thereof; and naturally occurring macromolecular compounds such as shellac.

Among these, a water-soluble dispersant having introduced carboxyl groups is preferable as the hydrophilic macromolecular compound, such as a homopolymer of acrylic acid, or methacrylic acid, or a copolymer of one of these monomers and another monomer having a hydrophilic group, such as styrene acrylic acid copolymer.

Out of polymer dispersants, a polymer having both a hydrophobic part and a hydrophilic part may be used as the water-insoluble dispersant. Examples thereof include: a copolymer of styrene - (meth)acrylic acid, a copolymer of styrene - (meth)acrylic acid - (meth)acrylic acid ester, a copolymer of (meth)acrylic acid ester - (meth)acrylic acid, a copolymer of polyethylene glycol (meth)acrylate - (meth)acrylic acid, a copolymer of vinyl acetate - maleic acid, and a copolymer of styrene - maleic acid.

The weight average molecular weight of the polymer dispersant is preferably from 3,000 to 100,000, more preferably from 5,000 to 50,000, still more preferably from 5,000 to 40,000, and particularly preferably from 10,000 to 40,000.

The weight average molecular weight of the polymer dispersant is measured in the same manner as the weight average molecular weight of the polymer configuring the specific polymer particles.

From the viewpoints of self-dispersibility and aggregation speed on contact with the treatment liquid, the polymer dispersant preferably includes a polymer having a carboxyl group, is preferably a polymer having a carboxyl group and an acid value of 100 mg KOH/g or less, and is more preferably a polymer having a carboxyl group with an acid value of from 25 mg KOH/g to 100 mg KOH/g. In particular, when the ink composition of the invention is used in combination with a treatment liquid that causes aggregation of the components in the ink composition, a polymer dispersant having a carboxyl group and an acid value of 25 mg KOH/g to 100 mg KOH/g is effective. Details are given later regarding the treatment liquid.

The mixing mass ratio (p:s) of the pigment (p) and the dispersant (s) is preferably in a range of from 1:0.06 to 1:3, with a range of from 1:0.125 to 1:2 being more preferable, and a range of from 1:0.125 to 1:1.5 being still more preferable.

From viewpoints such as of light fastness and quality of images, preferably a dispersant is included together with the pigment, and more preferably an organic pigment and a polymer dispersant (preferably a polymer dispersant having a carboxyl group) are included. The ink composition preferably also includes a polymer-coated pigment having a polymer dispersant coating at least one part of the pigment surface. The ink composition also particularly preferably includes a polymer-coated pigment having a polymer dispersant having a carboxyl group coating at least one part of the pigment surface. Moreover, from the viewpoint of aggregation properties, the ink composition particularly preferably includes a water-insoluble polymer-coated pigment having a polymer dispersant having a carboxyl group coating at least one part of the pigment surface.

The average particle size of the pigment in a dispersed state (for example the average particle size of the polymer-coated pigment) is preferably from 10 nm to 200 nm, is more preferably from 10 nm to 150 nm, and is still more preferably from 10 nm to 100 nm. When the average particle size is 200 nm or less, color reproducibility is excellent, and excellent droplet impact properties are achieved when droplets make impact using an inkjet method. Excellent light fastness is achieved when the average particle size is 10 nm or greater. Regarding the particle size distribution of the colorant, such as a pigment, there are no particular limitations thereto, and either a colorant with a wide particle size distribution, or a colorant with a monodisperse particle size distribution may be employed. A mixture of two or more colorants that each have a monodisperse particle size distribution may also be employed. Reference here to the average particle size of the pigment in a dispersed state indicates the average particle size in the state when ink has been produced; however, similar size ranges apply at the stage prior to producing the ink, at the so-called concentrated ink dispersion stage.

Note that the average particle size of the pigment in the dispersed state is derived in the same manner as the average particle size and the particle size distribution of the specific polymer particles described above.

The pigment may be employed singly, or in a combination of two or more thereof. From the viewpoint of image density, the content of the pigment in the ink composition is preferably from 1% by mass to 20% by mass, and is more preferably from 2% by mass to 10% by mass, with respect to the ink composition.

Dye

Known dyes may be employed as the dye without particular limitation, and, for example, dyes such as those described in JP-ANos. 2001-115066, 2001-335714 and 2002-249677 may be suitably employed in the invention.

When a dye is employed, the dye may be employed held by a water-insoluble carrier. The carrier that holds the dye (water-insoluble colorant particles) may be employed as a water-based dispersion using a dispersant. The carrier is not particularly limited as long as it is insoluble in water or not readily soluble in water, and inorganic materials, organic materials and composite materials thereof may be used. Specifically, carriers such as those described in JP-ANos.

2001-181549 and 2007-169418, may be suitably used in the invention.

Polymerizable Compound

The ink composition according to the invention may include at least one polymerizable compound.

In ink compositions including a polymerizable compound, the polymerizable compound included in the ink composition can be polymerized and cured on application to the recording medium. This thereby enables the rubbing resistance of the images to be improved.

The polymerizable compound is preferably a water-soluble polymerizable compound.
Reference here to "water-soluble" means capable of dissolving in water to a specific concentration or greater. More specifically, the solubility is preferably 5% by mass or greater, and is more preferably 10% by mass or greater, in water at 25°C. The water-soluble polymerizable compound is preferably capable of dissolving (preferably uniformly dissolving) in a water-based ink composition. The polymerizable compound may be a substance that undergoes an increase in solubility and dissolves (preferably uniformly dissolves) in the ink composition due to the addition of a water-miscible solvent, described later.

The polymerizable compound is not particularly limited, and a mono-functional polymerizable compound, or a multi-functional polymerizable compound may be employed therefor.
A multi-functional polymerizable compound is preferable from the viewpoints of giving formed images with high rubbing resistance and scratch resistance, due to having high polymerizability and high polymerization efficiency when an image is cured by irradiation with actinic energy radiation.

The polymerizable compound is preferably a (meth)acrylamide compound.
Note that reference to a "(meth)acrylamide compound" means at least one out of a methacrylamide compound or an acrylamide compound. The (meth)acrylamide compound has a (meth)acrylamide structure within the molecule, and is a compound that polymerizes by irradiation with actinic energy radiation.

A multi-functional (meth)acrylamide compound is suitably employed from the above viewpoints.
From among multi-functional (meth)acrylamide compounds, a (meth)acrylamide compound represented by the following Formula (1) (also referred to below simply as a "compound represented by Formula (1)") is particularly preferable from the viewpoints of providing high polymerizablity and curability.
This compound has four acrylamide groups or methacrylamide groups as polymerizable groups within a single molecule. This compound exhibits curing by a polymerization reaction on application of energy, such as from actinic energy radiation, for example an alpha particle beam, gamma rays, X-rays, ultraviolet radiation, visible light radiation, infrared radiation, or an electron beam, or from heat. The compound represented by Formula (1) exhibits water solubility, and has excellent solubility in water-miscible solvents, such as water or an alcohol.
The compound represented by Formula (1) is also preferable from the viewpoint of ink jetting properties (and in particular continuous jetting properties).

(Meth)acrylamide Compound Represented by Formula (1)

As stated above, it is preferable that the ink composition of the invention include at least one polymerizable compound that is a (meth)acrylamide compound represented by the following Formula (1).

Formula (1)

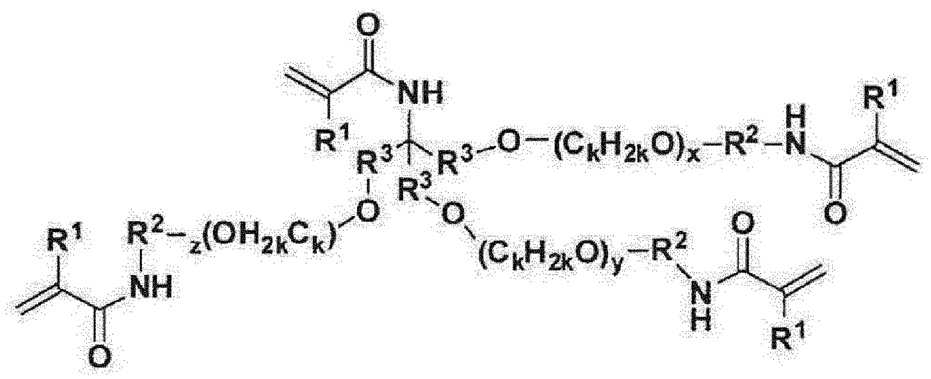

In Formula (1): $R^1$ represents a hydrogen atom or a methyl group; $R^2$ represents a straight chain or branched

alkylene group having from 2 to 4 carbon atoms, and $R^2$ is a structure in which the oxygen atom and the nitrogen atom, which are bound to both ends of the $R^2$ are not bound to the same carbon atom in $R^2$; $R^3$ represents a bivalent linking group; k represents 2 or 3; each of x, y, and z independently represents an integer of from 0 to 6, and the sum x + y + z equals a value from 0 to 18.

In Formula (1), $R^1$ represents a hydrogen atom or a methyl group. The plural $R^1$ groups may be the same as, or different from, each other. The $R^1$ is preferably a hydrogen atom.

In Formula (1), $R^2$ represents a straight chain or branched alkylene group having from 2 to 4 carbon atoms. The plural $R^2$ groups may be the same as, or different from, each other. The $R^2$ is preferably an alkylene group having from 3 to 4 carbon atoms, and more preferably an alkylene group having 3 carbon atoms, and is particularly preferably a straight chain alkylene group having 3 carbon atoms. The alkylene group of the $R^2$ may have a further substituent, with examples of substituents including an aryl group, or an alkoxy group. The $R^2$ is a structure in which the oxygen atom and the nitrogen atom bound to both ends of the $R^2$, and are not bound to the same carbon atom in $R^2$. The $R^2$ is a straight chain or branched alkylene group with the oxygen atom bound to the nitrogen atom of the (meth)acrylamide group. Given an alkylene group with a branched structure, a possible structure would be one in which the oxygen atom and the nitrogen atom of the (meth)acrylamide group at both ends of the $R^2$ are bound to the same carbon atom in the alkylene group, in a -O-C-N- structure (a hemiaminal structure). However, the compound represented by Formula (1) does not include compounds with such a structure. This thereby enables decomposition at the location of the carbon atom in the -O-C-N- structure to be suppressed, enabling the storage stability of the ink composition to be further improved.

In Formula (1), $R^3$ represents a bivalent linking group. Examples of the bivalent linking group $R^3$ include an alkylene group, an arylene group, a heterocyclic group, and groups configured from combinations thereof. An alkylene group is preferable. Note that when the bivalent linking group includes an alkylene group, the alkylene group may further include at least one group selected from -O-, -S-, or $-NR^a-$. $R^a$ represents a hydrogen atom, or an alkyl group having from 1 to 4 carbon atoms.

When the $R^3$ includes an alkylene group, examples of the alkylene group include a methylene group, an ethylene group, a propylene group, a butylene group, a pentylene group, a hexylene group, a heptylene group, an octylene group, and a nonylene group. The number of carbon atoms in the alkylene group of the $R^3$ is preferably from 1 to 6, is more preferably from 1 to 3, and is particularly preferably 1. The alkylene group of the $R^3$ may further include at least one group selected from -O-, -S-, or $-NR^a-$. Examples of alkylene groups having an -O- include $-C_2H_4-O-C_2H_4-$, or $-C_3H_6-O-C_3H_6-$. The alkylene group of the $R^3$ may also have a substituent, and examples of the substituent include an aryl group, or an alkoxy group.

When the $R^3$ includes an arylene group, examples of the arylene group include a phenylene group, or a naphthylene group. The number of carbon atoms in the arylene group of the $R^3$ is preferably from 6 to 14, more preferably from 6 to 10, and particularly preferably 6.
The arylene group of the $R^3$ may also include a substituent, and examples of substituents include an alkyl group, or an alkoxy group.

When the $R^3$ includes a heterocyclic group, the heterocyclic group is preferably a 5-membered or 6-membered ring, and these rings may be further condensed. The heterocyclic group may be an aromatic heterocyclic group or a non-aromatic heterocyclic group. When the $R^3$ includes the heterocyclic group, specific examples of the heterocyclic group include pyridine, pyrazin, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, and thiazolin. From among these, an aromatic heterocyclic group is preferable, and pyridine, pyrazin, pyrimidine, pyridazine, triazine, pyrazole, imidazole, benzimidazole, triazole, thiazole, benzothiazole, isothiazole, benzisothiazole, and thiadiazole are preferable. Note that the heterocyclic groups listed above are described without mentioning substitution positions, and such substitution positions are not limited. For example, since in pyridine substitution is possible at the second position, third position, and fourth position, all such substitution products may be included. The above heterocyclic groups may also include substituents, and examples of substituents include an alkyl group, an aryl group, and an alkoxy group.

In Formula (1), k represents 2 or 3. The plural values of k may be the same as, or different from, each other. $C_kH_{2k}$ may be a straight chain structure or a branched structure.

In Formula (1), each of x, y, and z independently represents integers of from 0 to 6, preferably represent integers of from 0 to 5, and more preferably represent integers of from 0 to 3. The sum x + y + z equals a value from 0 to 18, is preferably a value from 0 to 15, and is more preferably a value from 0 to 9.

Specific examples of compounds represented by Formula (1) are illustrated below (polymerizable compounds a to f); however, the compound represented by Formula (1) is not limited thereto.

Polymerizable compounds a

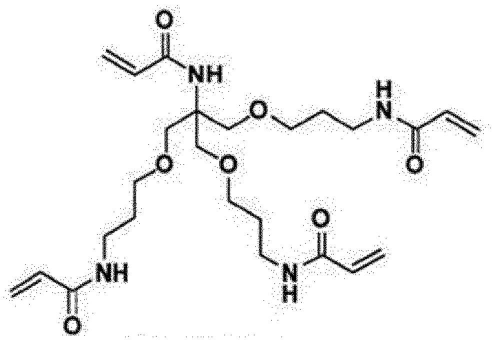

Polymerizable compounds b

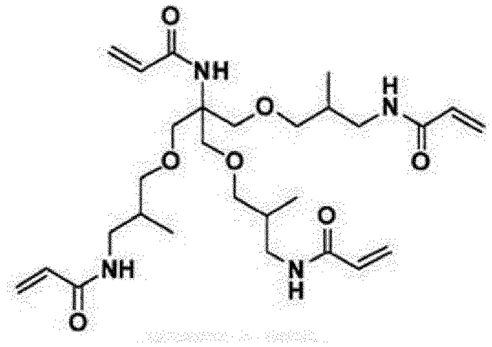

Polymerizable compounds c

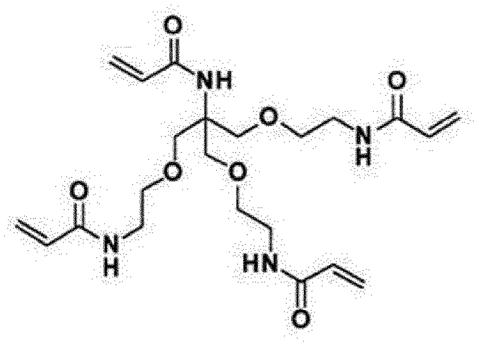

Polymerizable compounds d

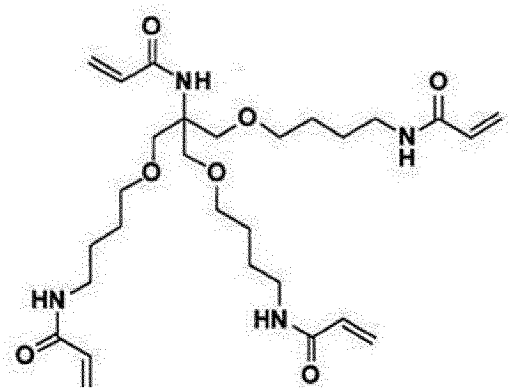

Polymerizable compounds e

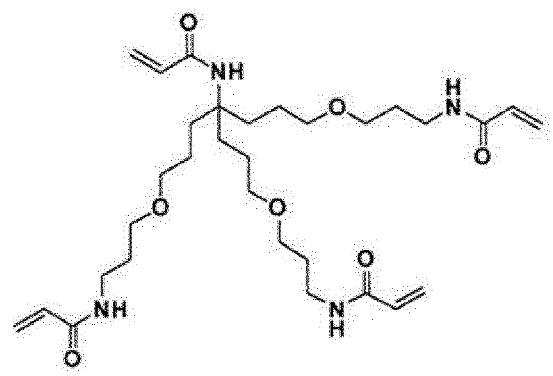

Polymerizable compounds f

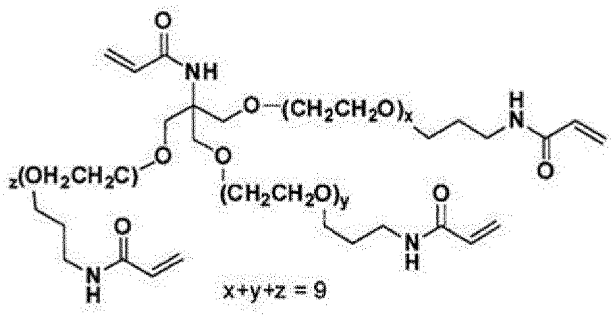


Although there are no particular limitations to the method of synthesizing the compound represented by Formula (1), for example, the method described in paragraphs to [0033] and paragraphs [0123] to [0139] of JP-A No. 2013-18846 may be employed.

In cases in which the ink composition according to the invention includes the compound represented by Formula (1), the compound represented by Formula (1) may be included singly, or two or more compounds thereof may be included in the ink composition. In cases in which the ink composition includes the compound represented by Formula (1), the content of the compound represented by Formula (1) is preferably from 0.1% by mass to 45% by mass, more preferably at from 1% by mass to 30% by mass, and particularly preferably at from 2% by mass to 20% by mass, with respect to the total amount of the ink composition. When the content of the compound represented by Formula (1) is

within the above ranges, the curability and the storage stability of the ink composition are further improved. From the viewpoint of curability, the content is more preferably 3% by mass or greater, is still more preferably 5% by mass or greater, and is particularly preferably 7% by mass or greater.

The content ratio of the (meth)acrylamide compound represented by Formula (1) is preferably 50% by mass or greater (more preferably 70% by mass or greater, still more preferably 80% by mass or greater, and particularly preferably 90% by mass or greater), with respect to the total content of the polymerizable compound in the ink composition. Such a form exhibits excellent curability and continuous ink jetting ability.

(Meth)acrylamide Compound Represented by Formula (2)

The ink composition according to the invention may include at least one mono-functional (meth)acrylamide compound represented by the following Formula (2) (also referred to below as "compound represented by Formula (2)"). This thereby enables flexibility of images to be improved.

The ink composition according to the invention may, for example, employ a combination of the compound represented by Formula (1) and the compound represented by Formula (2).

Formula (2)

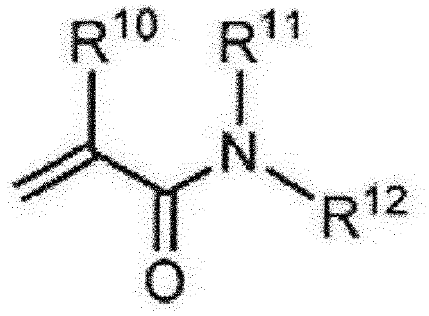

In Formula (2): $R^{10}$ represents a hydrogen atom, or a methyl group; $R^{11}$ represents a hydrogen atom, a methyl group, or an ethyl group; $R^{12}$ represents a substituted or unsubstituted alkyl group; the $R^{11}$ and the $R^{12}$ may be bound together to form a ring having from 5-members to 8-members, and the ring having from 5-members to 8-members may further include at least one group selected from -O-, -S-, or $-NR^b-$. $R^b$ represents a hydrogen atom or alkyl group having from 1 to 4 carbon atoms.

In Formula (2) the $R^{10}$ represents a hydrogen atom, or a methyl group, and is preferably a hydrogen atom.

The $R^{11}$ represents a hydrogen atom, a methyl group, or an ethyl group, is preferably a hydrogen atom or a methyl group, and is more preferably a hydrogen atom.

The $R^{12}$ represents a substituted or unsubstituted alkyl group. The alkyl group of the $R^{12}$ is preferably a straight chain or branched alkyl group having from 1 to 6 carbon atoms (for example a methyl group, an ethyl group, a propyl group, a butyl group, a pentyl group, or a hexyl group), is more preferably an alkyl group having from 2 to 4 carbon atoms, and is particularly preferably an alkyl group having 2 or 3 carbon atoms.

Specific examples of the specific compound represented by Formula (2) include the following compounds (C-1) to (C-13); however, the compound represented by Formula (2) is not limited thereto.

(C-1) : diacetone acrylamide (manufactured by Nippon Kasei Chemical Co., Ltd)
(C-2) : hydroxyethyl acrylamide (manufactured by KOHJIN Film & Chemicals Co., Ltd.)
(C-3) : hydroxypropyl acrylamide (manufactured by Fluka)
(C-4) : N-[1,1-bis(hydroxymethyl)-2-hydroxyethyl]propene amide (manufactured by Sigma-Aldrich Co. LLC.)
(C-5) : N-(2-dimethylaminoethyl)acrylamide (manufactured by Sigma-Aldrich Co. LLC.)
(C-6) : dimethylaminopropyl acrylamide (manufactured by KOHJIN Film & Chemicals Co., Ltd.)
(C-7) : 2-(acryloyloxy)-N,N,N-trimethylethane ammonium chloride (manufactured by KOHJIN Film & Chemicals Co., Ltd.)
(C-8) : (3-acrylamidopropyl)trimethylammonium chloride (manufactured by KOHJIN Film & Chemicals Co., Ltd.)
(C-9) : 2-acrylamido-2-methylpropane sulfonic acid (manufactured by Toagosei Co., Ltd.)
(C-10) : N-[1,1-dimethyl-2-(sodiooxysulfonyl)ethyl]acrylamide (manufactured by Sigma-Aldrich Co. LLC.)
(C-11) : N,N-dimethylacrylamide (manufactured by KOHJIN Film & Chemicals Co., Ltd.)
(C-12) : N,N-diethylacrylamide (manufactured by KOHJIN Film & Chemicals Co., Ltd.)

(C-13) : 4-acryloylmorpholine (manufactured by KOHJIN Film & Chemicals Co., Ltd.)

In cases in which the ink composition includes the compound represented by Formula (2), the compound represented by Formula (2) may be included singly, or two or more compounds thereof may be included in the ink composition.
In cases in which the ink composition includes the compound represented by Formula (2), preferable ranges for the content of the compound represented by Formula (2) are the same as the preferable ranges for the content of the compound represented by Formula (1), described above.
As stated above, the ink composition according to the invention may include a combination of the compound represented by Formula (1) and the compound represented by Formula (2).
From the viewpoint of raising the continuous ink jetting ability, the mass ratio of the compound represented by Formula (1) to the compound represented by Formula (2) is preferably from 100:0 to 50:50, more preferably from 100:0 to 70:30, still more preferably from 100:0 to 80:20, particularly preferably from 100:0 to 90:10, and most preferably 100:0. When the above mass ratio is from 100:0 to 50:50, the characteristics of the compound represented by Formula (1) are more effectively maintained.
Examples of the polymerizable compound also include polymerizable compounds other than the compound represented by Formula (1) and the compound represented by Formula (2).
Obviously these other polymerizable compounds may also be employed in combination with the compound represented by Formula (1) (and, if required, with the compound represented by Formula (2)).
Examples of these other polymerizable compounds include, for example, the nonionic polymerizable monomers and cationic polymerizable monomers described in paragraphs [0149] to [0169] of JP-ANo. 2011-46872.
The content of the polymerizable compound in the ink composition (the total content when two or more polymerizable compounds are included) is preferably from 0.1 % by mass to 45% by mass, more preferably from 1% by mass to 30% by mass, and particularly preferably from 2% by mass to 20% by mass, with respect to the entire ink composition.
When the content of the polymerizable compound is within the above ranges, the curability and the storage stability of the ink composition are improved further.

Polymerization Initiator

In cases in which the ink composition according to the invention includes a polymerizable compound, preferably a polymerization initiator is also included.
The polymerization initiator has the function of initiating polymerization of the polymerizable compound by actinic energy radiation.
The polymerization initiator may be employed singly, or in a mixture of two or more thereof. The polymerization initiator may also be employed in combination with a sensitizer.
The polymerization initiator may be appropriately selected and included as a compound capable of initiating a polymerization reaction of polymerizable compounds by actinic energy radiation. Examples of the polymerization initiator include polymerization initiators that generate active species (such as radicals, acid groups, or base groups) by irradiation with radiation, light or an electron beam (such as a photopolymerization initiator).
Examples of photopolymerization initiators include acetophenone, 2,2-diethoxyacetophenone, p-dimethylaminoacetophen, p-dimethylaminopropiophenone, benzophenone, 2-chlorobenzophenone, p,p'-dichlorobenzophen, p,p'-bisdiethylaminobenzophenone, Michler's ketone, benzyl, benzoin, benzoin methyl ether, benzoin ethyl ether, benzoin isopropyl ether, benzoin n-propyl ether, benzoin isobutyl ether, benzoin n-butyl ether, benzyl dimethyl ketal, tetramethyl thiuram monosulfide, thioxanthone, 2-chlorothioxanthone, 2-methyl thioxanthone, azobisisobutyronitrile, benzoin peroxide, di-tert-butyl peroxide, 1-hydroxycyclohexyl phenyl ketone, 1-[4-(2-hydroxyethoxy)-phenyl]-2-hydroxy-2-methyl-1-propan-1-one, 2-hydroxy-2-methyl-1-phenyl-1-one, 2-hydroxy-2-methyl-1-phenyl-propan-1-one, 1-(4-isopropylphenyl)-2-hydroxy-2-methyl propan-1-one, and methyl benzoyl formate. Examples further include aromatic diazonium salts, aromatic halonium salts, aromatic sulfonium salts, and metallocene compounds, such as triphenylsulfonium hexafluorophosphate, or diphenyliodonium hexafluoroantimonate for example. The 1-[4-(2-hydroxyethoxy)-phenyl]-2-hydroxy-2-methyl-1-propan-1-one compound may be procured as a commercial product, with examples including IRGACURE 2959 (trade name, manufactured by BASF Japan Ltd.). Moreover, commercially available 2-hydroxy-2-methyl-1-phenyl-1-one products include DAROCUR 1173 (trade name, manufactured by BASF Japan Ltd.).
The total content of polymerization initiator(s) in the ink composition according to the invention (the total content when there are two or more polymerization initiators) is preferably from 0.3% by mass to 10.0% by mass, more preferably from 0.5% by mass to 7.0% by mass, and particularly preferably from 0.8% by mass to 5.0% by mass, with respect to the total content of the ink composition.
The ink composition according to the invention may also include a water-miscible organic solvent, a surfactant, a water-soluble macromolecular compound, an anti-foaming agent, colloidal silica, and wax particles. Explanation follows

regarding these components.

Water-miscible Solvent

Known water-miscible solvents may be employed as the water-miscible solvent without any particular limitation.

From the viewpoint of further suppressing precipitates from arising in low temperature environments, the water-miscible solvent is preferably at least one solvent selected from the group consisting of compounds represented by the following Formula (A) and compounds represented by the following Formula (B).

Formula (A)

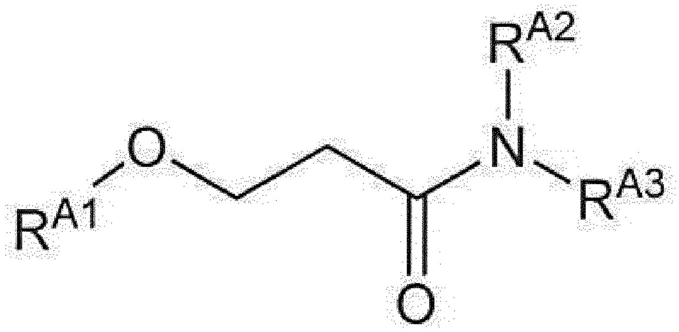

Formula (B)

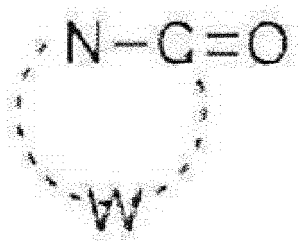

In Formula (A): $R^{A1}$ represents a straight chain or branched alkyl group having from 1 to 6 carbon atoms; $R^{A2}$ and $R^{A3}$ each independently represent a hydrogen atom or a straight chain or branched alkyl group having from 1 to 4 carbon atoms.

In Formula (B): W represents a bivalent linking group that forms a heterocycle with the carbon atom and the nitrogen atom in Formula (B).

Compound Represented by Formula (A)

Explanation follows regarding a compound represented by Formula (A), that is an example of a water-miscible solvent.

A β-alkoxypropionamide compound of the above structure is a compound represented by Formula (A).

In the ink composition, the compound represented by Formula (A) is capable of maintaining the solubility of the polymerization initiator, and also of raising the compatibility between the polymerization initiator and water.

Thus, in cases in which the compound represented by Formula (A) is included in the ink composition, the polymerization initiator is not readily precipitated even when the ink composition is placed in a low temperature environment. Such a compound also has a small environmental impact and low odor, and so facilitates handling of the ink composition.

In Formula (A), examples of straight chain or branched alkyl groups having from 1 to 6 carbon atoms represented by the $R^{A1}$ include a methyl group, an ethyl group, a propyl group, an isopropyl group, an n-butyl group, a tert-butyl group, an n-pentyl group, and an n-hexyl group.

In Formula (A), examples of straight chain or branched alkyl groups having from 1 to 6 carbon atoms represented by the $R^{A2}$ and the $R^{A3}$ include a methyl group, an ethyl group, a propyl group, an isopropyl group, an n-butyl group, and a tert-butyl group.

From among the above, the alkyl group represented by the $R^{A1}$ preferably has from 3 to 6 carbon atoms, and

is more preferably a propyl group, an isopropyl group, an n-butyl group, a tert-butyl group, an n-pentyl group, or an n-hexyl group.

Alkyl groups represented by the $R^{A2}$ or the $R^{A3}$ preferably have from 1 to 3 carbon atoms, and a methyl group or an ethyl group is more preferable.

Examples of the compound represented by Formula (A) are represented by the following compounds A-1 to A-33; however, the compound represented by Formula (A) is not limited thereto.

A-1: 3-methoxy-N,N-dimethylpropionamide
A-2: 3-n-butoxy-N,N-dimethylpropionamide
A-3: 3-ethoxy-N,N-diethylpropionamide
A-4: 3-methoxy-N,N-diethylpropionamide
A-5: 3-methoxy-N,N-monomethyl monoethyl propionamide
A-6: 3-methoxy-N,N-di-n-propylpropionamide
A-7: 3-methoxy-N,N-di-n-butylpropionamide
A-8: 3-methoxy-N,N-di-n-butylpropionamide
A-9: 3-ethoxy-N,N-dimethylpropionamide
A-10: 3-ethoxy-N,N-monomethyl monoethyl propionamide
A-11: 3-ethoxy-N,N-di-n-propylpropionamide
A-12: 3-ethoxy-N,N-di-n-butylpropionamide
A-13: 3-n-butoxy-N,N-diethylpropionamide
A-14: 3-n-butoxy-N,N-monomethyl monoethyl propionamide
A-15: 3-n-butoxy-N,N-di-n-propylpropionamide
A-16: 3-n-butoxy-N,N-di-n-butylpropionamide
A-17: 3-n-propoxy-N,N-dimethylpropionamide
A-18: 3-n-propoxy-N,N-diethylpropionamide
A-19: 3-n-propoxy-N,N-monomethyl monoethyl propionamide
A-20: 3-n-propoxy-N,N-di-n-propylpropionamide
A-21: 3-n-propoxy-N,N-di-n-butylpropionamide
A-22: 3-iso-propoxy-N,N-dimethylpropionamide
A-23: 3-iso-propoxy-N,N-diethylpropionamide
A-24: 3-iso-propoxy-N,N-monomethyl monoethyl propionamide
A-25: 3-iso-propoxy-N,N-di-n-propylpropionamide
A-26: 3-iso-propoxy-N,N-di-n-butylpropionamide
A-27: 3-tert-butoxy-N,N-dimethylpropionamide
A-28: 3-tert-butoxy-N,N-diethylpropionamide
A-29: 3-tert-butoxy-N,N-monomethyl monoethyl propionamide
A-30: 3-tert-butoxy-N,N-di-n-propylpropionamide
A-31: 3-tert-butoxy-N,N-di-n-butylpropionamide
A-32: 3-hexyloxy-N,N-dimethylpropionamide
A-33: 3-hexyloxy-N,N-diethylpropionamide

The compound represented by Formula (A) may be employed singly, or in a combination of two or more thereof. As a specific manufacturing method for the compound represented by Formula (A), manufacture may be performed based on the synthetic methods described in, for example, JP-A No. 2009-185079 and International Publication (WO) No. 2008/102615. A commercial product may be employed as the compound represented by Formula (A) and may, for example, be procured as "Equamide" (trade name, manufactured by Idemitsu Kosan Co., Ltd.).

As the compound represented by Formula (A),
3-n-butoxy-N,N-dimethylpropionamide (the compound A-2 listed above) is most preferable.

Compound Represented by Formula (B)

Explanation next follows regarding the compound represented by Formula (B), that is an example of a water-miscible solvent.

The compound represented by Formula (B) is a heterocyclic compound of the above structure.

In the ink composition, the compound represented by Formula (B) is capable of raising the compatibility between the polymerization initiator and water while maintaining the solubility of the polymerization initiator.

In the Formula (B), the W represents a bivalent linking group that forms a heterocycle with the carbon atom

and the nitrogen atom in Formula (B).
The W is preferably an alkylene group.
Such an alkylene group may be unsubstituted, or have a substituent. The substituent is preferably an alkyl group (preferably a linear chain, branched, or cyclic alkyl group having from 1 to 6 carbon atoms), a hydroxy group, or a hydroxyalkyl group (preferably a hydroxyalkyl group having from 1 to 6 carbon atoms).
The number of carbon atoms in the alkylene group (including the number of carbon atoms in any substituent in substituted cases) is preferably within a range of from 1 to 10.
The number of members in the heterocycle of Formula (B) is preferably from 3 to 6.
Specific examples of compounds represented by Formula (B) include 2-pyrrolidone, 1-methyl-2-pyrrolidone, 1-ethyl-2-pyrrolidone, 1-propyl-2-pyrrolidone, 1-butyl-2-pyrrolidone, 1-pentyl-2-pyrrolidone, 1-hexyl-2-pyrrolidone, 1-hydroxyethyl-2-pyrrolidone, and 1-cyclohexyl-2-pyrrolidone. Of these 2-pyrrolidone is particularly preferable from the viewpoint of solubility of the polymerization initiator.

In cases in which the ink composition according to the invention includes at least one compound chosen from the group consisting of compounds represented by Formula (A) and compounds represented by Formula (B), serving as the water-miscible solvent, the total content of the compound represented by Formula (A) and the compound represented by Formula (B) is preferably from 2% by mass to 20% by mass, with respect to the total amount of the ink composition.
Setting the above total content at 2% by mass or greater enables the solubility of the polymerization initiator to the ink composition to be raised further.
Setting the above total content at 20% by mass or lower enables the curability of the ink composition to be improved due to enabling sufficient polymerizable compound to be included in the ink composition.
The above total content is more preferably from 3% by mass to 18% by mass, is still more preferably from 4% by mass to 15% by mass, and is particularly preferably from 5% by mass to 12% by mass, with respect to the total amount of the ink composition.

From out of the compound represented by Formula (A) and the compound represented by Formula (B) described above, the compound represented by Formula (B) is particularly preferable from the viewpoint of the ability to lower the viscosity of the ink and enable ink jetting ability (for example continuous jetting ability) to be further improved.

In cases in which the ink composition of the invention includes a water-miscible solvent, there are also examples of water-miscible solvents that may be employed as the water-miscible solvent other than the compound represented by Formula (A) and the compound represented by Formula (B).
As the water-miscible solvent, at least one compounds chosen from the group consisting of compounds represented by Formula (A) and compounds represented by Formula (B) may be employed in combination with another water-miscible solvent.

Other examples of the water-miscible solvent include: glycols such as glycerin, 1,2,6-hexanetriol, trimethylolpropane, ethylene glycol, propylene glycol, diethylene glycol, triethylene glycol, tetraethylene glycol, pentaethylene glycol, and dipropylene glycol; and polyhydric alcohols such as alkane diols such as 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol; and the sugars and sugar alcohols, hyaluronic acids, alkylalcohols having from 1 to 4 carbon atoms, glycolethers, 2-pyrrolidone, and N-methyl-2-pyrrolidone described in paragraph [0116] of JP-A No. 2011-42150. One or two or more of these solvents may be selected as appropriate. Polyhydric alcohols are also useful as drying prevention agents and wetting agents, and examples include those described in paragraph [0117] of JP-ANo. 2011-42150. Apolyol compound is preferable as a penetrating agent; suitable examples of aliphatic diols include those described in paragraph [0117] of JP-A No. 2011-42150.
Other water-miscible solvents may also be appropriately selected, for example from out of the water-miscible solvents described in paragraphs [0176] to [0179] of JP-A No. 2011-46872, and from the water-miscible solvents described in paragraphs [0063] to [0074] of JP-A No. 2013-18846.

In cases in which the water-miscible solvent is included in the ink composition of the invention, the content of the water-miscible solvent (the total content when two or more solvents are included) is preferably from 2% by mass to 20% by mass, with respect to the total amount of the ink composition.
Setting the above total content at 2% by mass or greater enables the solubility of the polymerization initiator to the ink composition to be raised.
Setting the above total content at 20% by mass or lower enables the curability of the ink composition to be improved due to enabling sufficient polymerizable compound to be included in the ink composition.
The above total content is more preferably from 3% by mass to 18% by mass, and is still more preferably from 4% by mass to 15% by mass, with respect to the total amount of the ink composition.

<Surfactant>

The ink composition in the present invention may include, as necessary, at least one surfactant. The surfactant may be used, for example, as a surface tension adjuster.

As the surfactant, a compound having a structure in which both a hydrophilic moiety and a hydrophobic moiety are contained in the molecule, or the like can be effectively used, and any of an anionic surfactant, a cationic surfactant, an amphoteric surfactant, a nonionic surfactant, or a betaine surfactant can be used. Further, the water-soluble polymer described above (a polymer dispersant) may also be used as a surfactant.

In the present invention, a nonionic surfactant is preferable from the viewpoint of suppression of interference between spotted ink droplets. Above all, acetylene glycol derivatives (acetylene glycol based surfactants) are more preferable.

Examples of the acetylene glycol based surfactants may include 2,4,7,9-tetramethyl-5-decyne-4,7-diol and an alkylene oxide adduct of 2,4,7,9-tetramethyl-5-decyne-4,7-diol, and at least one selected from the above surfactants is preferable. Examples of commercially available products of these compounds may include E series such as OLFINE E1010 (trade name, manufactured by Nissin Chemical Industry Co., Ltd.).

In a case in which the ink composition contains a surfactant (a surface tension adjuster), the addition amount of the surfactant is preferably an addition amount that adjusts the surface tension of the ink composition to 20 mN/m to 60 mN/m, from the viewpoint of well ejecting the ink composition in accordance with an inkjet system. From the viewpoint of surface tension, the addition amount of the surfactant is more preferably an addition amount that adjusts the surface tension of the ink composition to 20 mN/m to 45 mN/m, and even more preferably an addition amount that adjusts the surface tension of the ink composition to 25 mN/m to 40 mN/m.

In cases in which the ink composition according to the invention includes a surfactant, there are no particular limitations to the specific amount of the surfactant, and the specific amount is preferably 0.1 % by mass or greater, more preferably from 0.1 % by mass to 10% by mass, and still more preferably from 0.2% by mass to 3% by mass, with respect to the total amount of the ink composition.

Water-soluble Macromolecular Compound

The ink composition according to the invention preferably includes at least one water-soluble macromolecular compound, if required. There are no particular limitations to the water-soluble macromolecular compound, and known water-soluble macromolecular compounds such as polyvinyl alcohol, polyacrylamide, polyvinylpyrrolidone, or polyethylene glycol may be employed.

As the water-soluble macromolecular compound, a specific macromolecular compound sometimes included in the treatment liquid, described later, or the water-soluble macromolecular compounds described in paragraphs [0026] to [0080] of JP-A No. 2013-001854, are suitably employed.

Anti-Foaming Agent

The ink composition according to the invention may, if required, include at least one anti-foaming agent.

Examples of the anti-foaming agent include silicone-based compounds (silicone-based anti-foaming agents), and pluronic-based compounds (pluronic-based anti-foaming agents), with silicon-based anti-foaming agents being preferable among these.

As the silicone-based anti-foaming agent, a silicone-based anti-foaming agent having a polysiloxane structure is preferable.

Commercial products may be employed as the anti-foaming agent.
Examples of such commercial products include BYK-012, 017, 021, 022, 024, 025, 038, 094 (trade names, manufactured by BYK Chemie Japan KK), KS-537, KS-604, KM-72F (trade names, manufactured by Shin-Etsu Chemical Co., Ltd.), TSA-739 (trade name, manufactured by Momentive Performance Materials Japan LLC), and OLFINE AF104 (trade name, manufactured by Nissin Chemical Industry Co., Ltd.).
Among these, silicone-based anti-foaming agents BYK-017, 021, 022, 024, 025, and 094, KS-537, KS-604, KM-72F, and TSA-739 are preferable, and of these, BYK-024 is most preferable in view of ink jetting stability.

In cases in which the ink composition according to the invention includes the anti-foaming agent, the content of the anti-foaming agent is preferably from 0.0001% by mass to 1% by mass, and is more preferably from 0.001% by mass to 0.1 % by mass, with respect to the total amount of the ink composition.

Colloidal Silica

The ink composition according to the invention may, if required, include colloidal silica. This thereby enables

stability to be further raised during continuous ink jetting.

The colloidal silica is a colloid configured from fine particles of an inorganic oxide including silicon atoms, the fine particles having an average particle size of several 100 nm or less. The colloidal silica includes silicon dioxide (including hydrated silicon dioxide) as the main component, and may include aluminate salts (such as sodium aluminate or potassium aluminate) as minor components.

The colloidal silica may also include inorganic salts such as sodium hydroxide, potassium hydroxide, lithium hydroxide, or ammonium hydroxide, and organic salts such as tetramethylammonium hydroxide. These inorganic salts and organic salts may act, for example, as stabilizers for the colloid.

Appropriate reference may, for example, be made to paragraphs [0043] to [0050] of JP-A No. 2011-202117 regarding suitable examples of colloidal silica.

The ink composition according to the invention may also, if required, include an alkali metal silicate, either in place of the colloidal silica, or in addition to the colloidal silica. Appropriate reference may be made to paragraphs [0052] to [0056] of JP-A No. 2011-202117 regarding suitable examples of alkali metal silicates.

In cases in which the ink composition according to the invention includes the colloidal silica, the content of the colloidal silica is preferably from 0.0001% by mass to 10% by mass, is more preferably from 0.01% by mass to 3% by mass, is still more preferably from 0.02% by mass to 0.5% by mass, and is particularly preferably from 0.03% by mass to 0.3% by mass, with respect to the total amount of the ink composition.

Wax Particles

The ink composition according to the invention may include at least one type of wax particles. This thereby enables the rubbing resistance to be further improved.

Examples of the wax particles include particles of natural waxes and synthetic waxes, and mixed particles thereof, including: plant derived waxes such as carnauba wax, candelilla wax, bees-wax, rice wax, or lanolin; animal derived waxes; petroleum-based waxes such as paraffin wax, microcrystalline wax, polyethylene wax, oxidized polyethylene wax, or petrolatum; mineral-based waxes such as montanwax, or ozokerite wax; synthetic waxes such as carbon wax, Hoechst wax, polyolefin wax, or stearic acid amide; and $\alpha$-olefin/maleic acid anhydride copolymers.

The wax is preferably added in the form of a dispersion, and may, for example, be included in the ink composition as a dispersion such as an emulsion. Water is preferable as the solvent when employing a dispersion; however, there is no limitation thereto. For example, typical organic solvents may be suitably selected for use during dispersion. Reference may be made to paragraph [0027] of JP-A No. 2006-91780 regarding suitable examples of organic solvents.

The wax particles may be employed singly, or in a mixture of two or more types thereof.

Commercially available products may be employed as the wax particles. Examples of commercial products include Nopcote PEM 17 (trade name, manufactured by San Nopco Ltd.), Chemipearl W4005 (trade name, manufactured by Mitsui Chemicals, Inc.), and AQUACER 515 and AQUACER 593 (trade names, both manufactured by BYK Chemie Japan Co., Ltd.).

Preferable waxes from among the above are a carnauba wax or a polyolefin wax, and a carnaubawax is particularly preferable from the viewpoint of rubbing resistance.

In cases in which wax particles are included in the ink composition according to the invention, the content ratio of polymer particles to wax particles is preferably in a range of polymer particles:wax particles = from 1:5 to 5:1 (solid content ratio). Excellent rubbing resistance of images is exhibited when the content ratio is within this range.

Other Components

The ink composition of the invention may include other components, if required.

Examples of such other components include known additives such as a polymerization inhibitor, a drying prevention agent (wetting agent), an anti-fading agent, an emulsion stabilizer, a penetration promoting agent, an ultraviolet absorbing agent, a preservative, an anti-fungal agent, a viscosity regulator, a dispersion stabilizer, an anticorrosion agent, or a chelating agent.

From the viewpoints of aggregation speed and dispersion stability of the composition, the ink composition of the invention preferably has a pH of pH 7.5 or above at 25°C (±1°C), with from pH 7.5 to pH 13 being more preferable, and from pH 8 to pH 12 being still more preferable.

When the pH of the ink composition is 7.5 or greater, the storage stability of the ink composition is further raised. The pH is as measured in a 25°C environment using a pH meter WM-50EG (trade name, manufactured by DKK-TOA Corporation).

Acidic Compound-including Treatment liquid

The ink set of the invention includes the ink composition according to the invention that has already been described, and a treatment liquid including an acidic compound as a component that forms an aggregate body on contact with the ink composition (also referred to below as "treatment liquid").

The ink set of the invention has excellent jetting ability and stability of the ink composition, and also suppresses satellite droplet generation, thereby enabling formation of images with excellent image quality on a recording medium, and in particular on a recording medium that includes a base paper and a coated layer including an inorganic pigment (also referred to below as "coated paper").

Conventionally, when ink compositions including organic salts, or ink compositions including carbonate salts, are employed for image forming on a coated paper using an inkjet recording method, regions are generated where there is a low acid amount from treatment liquid application when using for example low grade paperboard with localized regions where the coating layer is thin. At these regions where the acid amount is low, there is a tendency for the dots of impacted droplets of the ink composition to spread out, with a tendency for unintentional density variation to appear due to localized regions where blank portions are reduced (for example density variation within a solid image), sometimes appearing as unevenness, a "mottled surface".

In the present specification, "mottled surface" refers to the phenomenon in which, at regions intermediate between light regions (highlights) and dark regions (shadow) in an image (intermediate regions), portions of high density of ink composition and portions of low density of ink composition are unevenly distributed, giving a mottled appearance.

"Mottled surface" is not a phenomenon that occurs due to localized insufficient aggregation of ink composition, such as conventional "bleeding" and "streaking"; "mottled surface" is a phenomenon caused by non-uniform aggregation due to non-uniform distribution of treatment liquid on a recording medium.

Examples of acidic compounds in the treatment liquid of the invention include acidic substances capable of lowering the pH of the ink composition.

Preferable examples of the acidic compound include sulfuric acid, hydrochloric acid, nitric acid, phosphoric acid, polyacrylic acid, acetic acid, glycoric acid, malonic acid, malic acid, maleic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumalic acid, thiophene carboxylic acid, nicotinic acid, or derivatives of such compound or salts thereof.

One of these acidic compounds may be used alone, or two or more of them may be used in combination.

In cases in which an acidic substance is included in the treatment liquid of the invention, the pH (at 25°C) of the treatment liquid is preferably 6.0 or lower, and more preferably the pH is 4.0 or lower. Within this range, the pH (at 25°C) is preferably in a range of from 0.1 to 4.0, and is particularly preferably a pH of from 0.1 to 0.5. In such circumstances, the pH (at 25°C) of the ink composition is preferably from 7.5 to 13.0 (and more preferably from 8.0 to 12.0).

In particular, when the pH of the treatment liquid is from 0.1 to 4.0, mottled surface is more suppressed in the formed image due to facilitating more uniform aggregation of the ink composition of the invention.

From among the above ranges, from the viewpoints of image density, resolution, and increasing the speed of inkjet recording, preferably the pH (at 25°C) of the ink composition is from 8.0 to 12.0, and the pH (at 25°C) of the treatment liquid is from 0.1 to 0.5. The pH is measured in a 25°C environment using a pH meter WM-50EG (trade name, manufactured by DKK-TOA Corporation).

Within the above conditions, preferably an acidic substance with a high solubility in water is employed as an aggregating agent in the invention, and from the viewpoints of raising aggregation and immobilizing the ink as a whole, an organic acid is preferable, with an organic acid with a valence of 2 or higher preferable, and with an acidic substance with a valence of 2 or 3 being particularly preferable. As the organic acid with valence of 2 or higher, an organic acid with a first pKa of 3.5 or lower is preferable, and an organic acid with a first pKa of 3.0 or lower is more preferable. Specific examples of the acidic compound that are suitably applied include phosphoric acid, oxalic acid, malonic acid, and citric acid.

Water-soluble Macromolecular Compound

The treatment liquid may include at least one water-soluble macromolecular compound. There are no particular limitations to the water-soluble macromolecular compound, and known water-soluble macromolecular compounds may be employed, such as a polyvinyl alcohol, polyacrylamide, polyvinylpyrrolidone, or polyethylene glycol.

Specific macromolecular compounds described later, and the water-soluble macromolecular compounds described in paragraphs [0026] to [0080] in JP-A No. 2013-001854 may also be suitably employed as the water-soluble macromolecular compound.

Although not particularly limited, the weight average molecular weight of the water-soluble macromolecular compound may, for example, be from 10000 to 100000, is preferably from 20000 to 80000, and is more preferably from

30000 to 80000.

Although not particularly limited, the content of the water-soluble macromolecular compound in the treatment liquid of the invention is preferably from 0.1% by mass to 10% by mass, is more preferably from 0.1% by mass to 4% by mass, is still more preferably from 0.1 % by mass to 2% by mass, and is particularly preferably from 0.1 % by mass to 1% by mass, with respect to the total amount of the treatment liquid.

Spreading of ink droplets can be better promoted when the content is 0.1 % by mass or more, and an increase in the viscosity of the treatment liquid can be further suppressed when the content is 10% by mass or less. Uneven coating of the treatment liquid caused by bubbles in the treatment liquid can be further suppressed when the content is 10% by mass or less.

As the water-soluble macromolecular compound, a macromolecular compound including a hydrophilic structural unit having an ionic group (preferably an anionic group) is preferable (also referred to below as "specific macromolecular compound"). This thereby enables spreading of ink droplets applied to a recording medium to be further promoted, and also enables image roughness to be further suppressed.

Examples of the ionic group in the specific macromolecular compound include a carboxyl group, a sulfonic acid group, a phosphoric acid group, a boric acid group, an amino group, an ammonium group, and salts thereof. Among these, a carboxyl group, a sulfonic acid group, a phosphoric acid group, and salts thereof are preferable, a carboxyl group, a sulfonic acid group, and salts thereof are more preferable, and a sulfonic acid group and salts thereof are still more preferable.

As the hydrophilic structural unit having an ionic group (preferably anionic group), a structural unit derived from a (meth)acrylamide compound having an ionic group (preferably an anionic group) is preferable.

The content of the hydrophilic structural unit having an ionic group (preferably an anionic group) in the water-soluble macromolecular compound may, for example, be from 10% by mass to 100% by mass, with respect to the total mass of the water-soluble macromolecular compound, is preferably from 10% by mass to 90% by mass, is more preferably from 10% by mass to 70% by mass, is still more preferably from 10% by mass to 50% by mass, and is particularly preferably from 20% by mass to 40% by mass.

The specific macromolecular compound, in addition to having at least one type of the hydrophilic structural unit having an ionic group (preferably an anionic group, and particularly preferably a sulfonic acid group), more preferably also includes at least one type of hydrophobic structural unit. Including a hydrophobic structural unit further facilitates the presence of the specific macromolecular compound at the treatment liquid surface, thereby better promoting spreading of ink droplets applied to a recording medium, and also better suppressing image roughness.

As the hydrophobic structural unit, a structural unit derived from a (meth)acrylate ester is preferable (preferably an alkyl ester of a (meth)acrylate having from 1 to 4 carbon atoms).

The content of the hydrophobic structural unit in the specific macromolecular compound may, for example, be from 10% by mass to 90% by mass, is preferably from 30% by mass to 90% by mass, is more preferably from 50% by mass to 90% by mass, and is particularly preferably from 60% by mass to 80% by mass, with respect to the total mass of the specific macromolecular compound.

Water

The treatment liquid may be configured to include water.

Although the content of the water is not particularly limited, a range of from 10% by mass to 99% by mass is preferable, from 50% by mass to 90% by mass is more preferable, and from 60% by mass to 80% by mass is still more preferable.

Organic Solvent

The treatment liquid preferably includes at least one selected organic solvent.

The same substances as for the water-miscible solvent sometimes included in the ink composition may be employed as the organic solvent. From among these, a polyalkylene glycol, or a derivative thereof is preferable from the viewpoint of suppressing curl, and at least one compound selected from the group consisting of diethylene glycol monoalkyl ether, triethylene glycol monoalkyl ether, dipropylene glycol, tripropylene glycol monoalkyl ether, polyoxypropylene glyceryl ether, and polyoxyethylene polyoxypropylene glycol is more preferable.

Although the included proportion of the organic solvent in the treatment liquid is not particularly limited, from the viewpoint of suppressing curl, the proportion is preferably from 1% by mass to 30% by mass, and more preferably from 5% by mass to 15% by mass, with respect to the total amount of the treatment liquid.

Anti-foaming Agent

The treatment liquid may include at least one anti-foaming agent, if required.

Examples of anti-foaming agents that may be included in the treatment liquid are the same as the anti-foaming agents that may be included in the ink composition.

When the anti-foaming agent is included in the treatment liquid, the content of the anti-foaming agent is preferably from 0.0001% by mass to 1% by mass, and is more preferably from 0.001 % by mass to 0.1 % by mass, with respect to the total amount of the treatment liquid.

Polymerization Initiator

At least one polymerization initiator that initiates polymerization of the polymerizable compound in the ink composition by actinic energy radiation may be included in the treatment liquid, in addition to being included in the ink composition. The polymerization initiator may be employed singly, or in a mixture of two or more thereof, or may be employed together with a sensitizer.

The polymerization initiator employed in the treatment liquid, similarly to that of the ink composition, may be appropriately selected from compounds capable of initiating a polymerization reaction of the polymerizable compound by actinic energy radiation. Examples of the polymerization initiator include polymerization initiators that generate active species (such as radicals, acid groups or base groups) by irradiation with radiation, light or an electron beam (such as a photopolymerization initiator).

Details regarding the polymerization initiator and the like are the same as explained above under Inkjet Ink Composition.

The treatment liquid may also include other additives as other components, within a range that is not detrimental to the effect of the invention. Examples of these other additives include known additives such as a drying prevention agent (wetting agent), an anti-fading agent, an emulsion stabilizer, a penetration promoting agent, an ultraviolet absorbing agent, a preservative, an anti-fungal agent, a pH regulator, a surface tension regulator, an anti-foaming agent, a viscosity regulator, a dispersant, a dispersion stabilizer, an anti-corrosion agent, and a chelating agent.

Image Forming Method

The image forming method of the invention includes, on a recording medium, an ink application process that forms an image by applying the ink composition of the described inkjet ink set onto the recording medium using an inkjet method, and a treatment liquid application process of applying the treatment liquid of the inkjet ink set onto the recording medium.

According to the image forming method of the invention, there is little buildup of aggregated matter at jetting openings even when images are formed over a long period of time, and/or on a large volume of recording medium, thereby securing excellent jetting ability over a long period of time. Moreover, images are formed with excellent image quality since formation of satellite droplets is suppressed.

Ink Application Process

In the ink application process the ink composition is applied to a recording medium using an inkjet method. The ink application process enables the ink composition to be selectively applied to the recording medium, enabling a desired visible image to be formed. Note that details regarding the ink composition, such as details of the ink composition and preferable specifications thereof, are described in the above explanation of the ink composition.

Image forming with an inkjet method is a method of forming a colored image by jetting ink compositions onto a desired recording medium by supplying energy. Note that the method described in paragraphs [0093] to [0105] of JP-A No. 2003-306623 may be suitably applied as a preferable inkjet method of the invention.

The inkjet method is not particularly limited and may be of any known system, for example, a charge control system of ejecting an ink utilizing an electrostatic attraction force, a drop on demand system of utilizing a vibration pressure of a piezo element (pressure pulse system), an acoustic inkjet system of converting electric signals into acoustic beams, irradiating them to an ink, and ejecting the ink utilizing a radiation pressure, and a thermal inkjet system of heating an ink to form bubbles and utilizing the resultant pressure (BUBBLEJET (registered trade mark)). As the inkjet method, in particular, an inkjet method, which is a method described in JP-A No. 54-59936 and in which an ink that has been subjected to thermal energy undergoes rapid volume change and is discharged from a nozzle due to an acting force according to this change in state, may be effectively used in the invention.

Examples of the inkjet method include a system of injecting a number of ink droplets of low concentration, a so-called "photo-ink" each in a small volume, a system of improving an image quality using plural inks of a substantially

identical hue and of different concentrations, and a system of using a colorless transparent ink.

Examples of the inkjet head include an inkjet head of a shuttle system in which a short serial head is used and recording is performed while allowing the head to scan in the across-the width direction of a recording medium, and an inkjet head of a line system in which a line head in which recording elements are arranged corresponding to the entire region for one side of a recording medium is used. In the line system, an image can be recorded over the entire surface of the recording medium by allowing the recording medium to be scanned in the direction being crossover to the direction of aligning the recording elements, in which a transportation system such as a carriage by which the short head moves for scanning is not necessary. Further, since complicated scanning control for the movement of the carriage and the recording medium is not necessary and only the recording medium is moved, higher recording speed can be attained as compared with the shuttle system. While the image forming method in exemplary embodiments of the invention is applicable to any one of them, the effect of improving the ejection accuracy and the abrasion resistance of the image is generally remarkable when the inkjet recording method is applied to the line system without performing dummy jetting.

The amount of ink per one drop jetted from an inkjet head is preferably from 1 pL to 10 pL, and more preferably from 1.5 pL to 6 pL, from the viewpoint of obtaining a high-precision image. It is also effective to jet liquid droplets of different quantities in combination, with a view to suppressing unevenness in an image and improving smoothness in continuous gradation. The present invention is effective also in such an embodiment.

In the image forming method according to the invention, a super drop method is preferably employed as the method to impact droplets of the ink composition onto the recording medium due to best exhibiting the effect of the inkjet ink set according to the invention. Details regarding a suitable inkjet method employing a super drop method are described, for example, in JP-ANo. 2006-188043.

Treatment Liquid Application Process

The image forming method of the invention also includes a treatment liquid application process in which the treatment liquid is applied to the recording medium.

The treatment liquid application process applies the treatment liquid, including an acidic compound that aggregates components in the ink composition, to the recording medium, causing the treatment liquid to contact the ink composition and make an image. In this case, dispersed particles, including the polymer particles in the ink composition, aggregate, and an image is immobilized on the recording medium. Note that the treatment liquid includes at least an aggregating agent, and details of each of the components in the treatment liquid and preferable specifications thereof are described above.

Application of the treatment liquid may be performed by applying known methods such as a coating method, an inkjet method, and an immersion method. The coating method may be performed by a known coating method using a bar coater, an extrusion die coater, an air doctor coater, a blade coater, a rod coater, a knife coater, a squeeze coater, a reverse roll coater or a bar coater. Details of the inkjet method are as described above.

The treatment liquid application process may be provided either before or after the ink application process using the ink composition. In the invention, a configuration in which the ink application process is provided after the treatment liquid application process is preferable.

More specifically, a preferable embodiment is one in which, prior to applying the ink composition onto the recording medium, the treatment liquid that causes components in the ink composition (the above dispersion particles) to aggregate is applied in advance, and then the ink composition is applied to the recording medium so as to contact the applied treatment liquid, making an image. This thereby enables inkjet recording speed to be increased, and enables an image with high density and resolution to be obtained even with high speed recording.

The amount of the treatment liquid to be applied is not particularly limited as long as the ink composition can be coagulated, and is preferably 0.1 $g/m^2$ or more in terms of the amount of applied aggregating agent. The amount of the applied aggregating agent is more preferably from 0.2 $g/m^2$ to 2.0 $g/m^2$. When the amount of the applied aggregating agent is 0.1 $g/m^2$ or more, superior high-speed coagulation properties that accord with various modes of the use of the inkjet composition are maintained. A aggregating agent application amount of 2.0 $g/m^2$ or less is preferable in that influences, such as change in gloss and the like, are not given to the surface properties of the recording medium to which the treatment liquid is applied.

According to exemplary embodiments of the invention, it is preferable to provide an ink applying process after the treatment liquid applying process, and to further provide a heating drying process of heating and drying the treatment liquid on the recording medium, between the time after applying the treatment liquid onto the recording medium, and the time until the ink composition is applied. By heating and drying the treatment liquid previously before the ink discharging process, ink coloring properties such as the prevention of bleeding becomes good, and visible images having good color density and hue can be recorded.

The heating and drying can be carried out by a known heating means such as heater, an air blowing means utilizing air blowing such as dryer, or a means combining these. Examples of the heating method include a method of

supplying heat by a heater or the like, from the surface of the recording medium opposite the surface applied with the treatment liquid, a method of blowing a warm air or hot air to the surface of the recording medium applied with the treatment liquid, a method of heating using an infrared heater, or the like. Heating can also be performed by combining these methods.

In the image forming method of the invention, an image is recorded on a recording medium having a base paper and a coating layer containing inorganic pigments. The coated paper is a product obtained by coating with a coating material the surface of a paper such as a high quality paper or neutral paper which is mainly based on cellulose and is not surface treated. The coated paper is likely to cause problems in product quality such as the gloss or abrasion resistance of images, in the conventional image formation by aqueous inkjet recording, but in the image forming method in exemplary embodiments of the invention, gloss irregularity is suppressed, and images having good glossiness and abrasion resistance are obtained. Particularly, it is preferable to use a coated paper having a base paper and a coating layer containing inorganic pigments, and more preferable to use a coated paper having a base paper and a coating layer containing at least one of kaolin and calcium bicarbonate. More specifically, art paper, coated paper, lightweight coated paper or finely coated paper is more preferred.

As the recording medium, a recording medium which is generally commercially available may be used, and examples include high quality paper such as OK Prince High Quality (trade name, manufactured by Oji Paper Co., Ltd.), Shiraoi (trade name, manufactured by Nippon Paper Industries Co., Ltd.), and New NP High Quality (trade name, manufactured by Nippon Paper Industries Co., Ltd. ), fine coated paper such as OK Ever Lite Coat (trade name, manufactured by Oji Paper Co., Ltd. ) and Aurora S (trade name, Nippon Paper Industries Co., Ltd. ), light coated paper (A3) such as OK Coat L (trade name, manufactured by Oji Paper Co., Ltd. ) and Aurora L (trade name, manufactured by Nippon Paper Industries Co., Ltd. ), coated paper (A2, B2) such as OK Top Coat +(trade name, manufactured by Oji Paper Co., Ltd. ) and Aurora Coat (trade name, manufactured by Nippon Paper Industries Co., Ltd. ), and an art paper (A1) such as OK Kanefuji +(trade name, manufactured by Oji Paper Co., Ltd. ) and Tokubishi Art (trade name, manufactured by Nippon Paper Industries Co., Ltd. ). Further, various papers for photography for use in inkjet recording methods may be used.

Among the recording media, a coated paper used in general offset printing is preferred.

Inkjet Recording Apparatus

There are no particular limitations to an image forming apparatus capable of employing the image forming method of the invention. An image forming apparatus equipped with a jetting head that impacts droplets onto a recording medium using a super drop method may be employed, such as for example known image forming apparatuses described in JP-A Nos. 2012-11585, and 2012-250477.

The image forming apparatus preferably is equipped with an actinic energy radiation (for example ultraviolet radiation) irradiation means. Appropriate reference may be made to known configurations such as described in JP-A No. 2011-184628 regarding configuration of other means including actinic energy radiation means.

Explanation follows regarding an example of an image forming apparatus that may be employed with the image forming method of the invention, with reference to Fig. 1.

Next, an example of an inkjet recording apparatus favorably used in the image forming method in the present invention will be explained in detail with reference to Fig. 1. Fig. 1 is a schematic view showing an example of a structure of the entire inkjet recording apparatus.

As shown in Fig. 1, the inkjet recording apparatus includes: treatment liquid application unit 12, having treatment liquid jetting head 12S that jets the treatment liquid; treatment liquid drying zone 13, having heating unit (not shown) that dries the applied treatment liquid; and ink jetting unit 14 that jets various ink compositions; and ink drying zone 15 at which the jetted ink composition is dried, in this order in the conveyance direction of the recording medium (the direction of the arrow shown in the figure). Further, UV ray irradiation unit 16, having UV ray irradiation lamp 16S, is provided downstream of ink drying zone 15 in the conveyance direction of the recording medium.

The recording medium that has been supplied to the inkjet recording apparatus is conveyed by conveyance rollers (conveyer rollers) from a feed section (paper supply unit) to treatment liquid application unit 12, then to treatment liquid drying zone 13, then to ink jetting unit 14, then to ink drying zone 15, and then to UV ray irradiation unit 16, and then accumulated in an accumulation section (storage unit). The feed section feeds sheets of the recording medium from a case in which the sheets are loaded. The conveyance of the recording medium may be conducted by a method other than the method using conveyance rollers, and examples thereof include a drum conveyance method using a drum-shaped member, a belt conveyance method, or a stage conveyance method using a stage.

Among the plural conveyance rollers provided in the inkjet recording apparatus, at least one roller may be a drive roller to which the force generated by a motor (not shown) is transmitted. By rotating the drive roller at a constant rate using the motor, the recording medium is conveyed in a predetermined direction at a predetermined conveyance amount.

Treatment liquid application unit 12 has treatment liquid jetting head 12S, which is connected to a storage tank in which the treatment liquid is stored. Treatment liquid jetting head 12S jets the treatment liquid from jetting nozzles disposed to face the recording surface of the recording medium so that droplets of the treatment liquid can be applied onto the recording medium. The method used in treatment liquid application unit 12 is not limited to a method of jetting from a head in the form of a nozzle, and may be a coating method using a coating roller. According to the coating method, the treatment liquid may be readily applied to almost the entire one surface of the recording medium, including an image portion on which ink droplets are to be spotted by ink jetting unit 14 provided at the downstream side.
In order to make uniform the thickness of the treatment liquid applied onto the recording medium, an air-knife may be used, or a method of providing a member having an acute angle to give a gap between the member and the recording medium that corresponds to the predetermined amount of treatment liquid may be adopted.

Treatment liquid drying zone 13 is positioned downstream of treatment liquid application unit 12 in the conveyance direction of the recording medium. Treatment liquid drying zone 13 may include: a known heating means such as a heater; an air blower such as a drier; or a combination thereof. The heating may be conducted by a method of disposing a heat-generating member, such as a heater, at a side of the recording medium opposite to the surface applied with the treatment liquid wherein, if the recording medium is conveyed automatically, the heat-generating member may be positioned, for example, below the conveyance system that conveys the recording medium placed thereon; or by a method of blowing warm or hot air onto the surface of the recording medium applied with treatment liquid; or by a method of using an infrared heater. Any of these methods may be used singly, or in combination of two or more thereof.

Since the surface temperature of the recording medium may vary depending on the type (material, thickness and the like) of the recording medium and the environmental temperature, it is preferable to apply the treatment liquid while regulating the surface temperature by using a system including a measurement section that measures the surface temperature of the recording medium and a control section that provides the heating control unit with feedback on the temperature measured by the measurement section. The measurement section for measuring the surface temperature of the recording medium is preferably a contact-type or non-contact type thermometer.

The solvent may be removed using, for example, a solvent-removing roller. Alternatively, a method in which excess solvent is removed from the recording medium by an air knife is also applicable.

Ink jetting unit 14 is positioned downstream of treatment liquid drying zone 13 with respect to the conveyance direction of the recording medium. Ink jetting unit 14 includes recording heads (ink jetting heads) 30K, 30C, 30M and 30Y, which are connected to ink reservoirs that store inks of black (K), cyan (C), magenta (M) and yellow (Y), respectively. Each ink reservoir (not shown) stores an ink composition containing a pigment of a corresponding color, polymer particles, water soluble solvent and water, and supplies the ink to the corresponding head among ink jetting heads 30K, 30C, 30M and 30Y, as necessary, when image recording is performed. Further, as shown in Fig. 1, recording heads 30A and 30B for jetting inks of specific colors may be further provided, which are positioned downstream of ink jetting heads 30K, 30C, 30M and 30Y with respect to the conveyance direction of the recording medium, such that recording heads 30A and 30B jet the inks having specific colors as necessary.

Ink jetting heads 30K, 30C, 30M and 30Y jet inks in a manner corresponding to the image to be formed, through jetting nozzles that are positioned so as to face the recording surface of the recording medium. In this way, inks of the respective colors are applied to the recording surface of the recording medium to form a color image.

Treatment liquid jetting head 12S and ink jetting heads 30K, 30C, 30M, 30Y, 30A and 30B are each in the form of full-line head in which a number of jetting ports (nozzles) are aligned along the maximum recording width of the image to be formed on the recording medium (the maximum recording width). In this form, image recording on a recording medium can be carried out at higher speed compared to serial-type recording in which recording is carried out using a short-length shuttle head that reciprocates in the width direction of the recording medium (in a direction on the plane of the recording medium that is perpendicular to the conveyance direction of the recording medium) in a scanning manner. In the present invention, either of the above serial-type recording method or a recording method capable of recording at relatively high speed, such as a single-path system in which one line image is formed in one scanning-movement, may be employed. In the image recording method of the present invention, a high-quality image having high reproducibility may be obtained even in the single-path system.

In the figure, treatment liquid jetting head 12S and ink jetting heads 30K, 30C, 30M, 30Y, 30A and 30B have the same structure.

The application amount of the treatment liquid and the application amount of the ink composition are preferably regulated in accordance with the necessity. For example, the amount of the treatment liquid may be changed according to the type of the recording medium, in order to, for example, adjust the properties such as viscoelasticity of the aggregates formed upon mixing of the treatment liquid and the ink composition.

Ink drying zone 15 is positioned downstream of ink jetting unit 14 in the conveyance direction of the recording medium. Ink drying zone 15 may have a structure similar to that of treatment liquid drying zone 13.

UV ray irradiation unit 16 is disposed further downstream of ink drying zone 15 in the conveyance direction of the recording medium, and emits UV rays from UV ray irradiation lamp 16S provided in UV ray irradiation unit 16, thereby

curing through polymerization of the monomer components contained in an image after drying of the image. UV ray irradiation lamp 16S is a lamp which is disposed to oppose the recording surface of the recording medium, and with which the entire recording surface is irradiated to cure the entire image. The lamp used in UV ray irradiation unit 16 is not limited to UV ray irradiation lamp 16S, and it is also possible to use a halogen lamp, a high-pressure mercury lamp, a laser, a LED, an electron-beam irradiation device, or the like.

The UV ray irradiation unit 16 may be disposed at either of before or after the ink drying zone 15, or at both of before and after the ink drying zone 15.

The inkjet recording apparatus may further include a heating unit at the conveyance path from the feed section to the accumulation section, in order to conduct a heat treatment on the recording medium. For example, by providing a heating unit at a desired position, such as upstream of treatment liquid drying zone 13 or between ink jetting unit 14 and ink drying zone 15, the temperature of the recording medium can be increased to a desired temperature, at which drying and fixing is performed effectively.

EXAMPLES

Hereinafter, the present invention will be more specifically described with reference to Examples, but the present invention is not limited to the following Examples unless beyond the gist of the invention. Unless stated otherwise, "parts" and "%" are based on mass.

In the present Examples, the weight average molecular weight is measured by gel permeation chromatography (GPC), and calculated in terms of polystyrene. In GPC analysis, an obtained polymer was isolated by removing the solvent, and then the obtained solid component was diluted to 0.1 % by mass with tetrahydrofuran, and measured using HLC-8020GPC (trade name, manufactured by Tosoh Corporation) with a column configured from serially connected TSK gel Super HZM-H, TSK gel Super HZ4000, and TSK gel Super HZ200 (trade names, manufactured by Tosoh Corporation). Measurement was performed with an RI detector under conditions of a sample concentration of 0.35% by mass, a flow rate of 0.35 mL/min, a sample injection amount of 10 μL, and a measurement temperature of 40°C. A calibration curve was produced from 8 samples of "Standard Sample TSK standard, polystyrene": "F-40", "F-20", "F-4", "F-1", "A-5000", "A-2500", "A-1000", and "n-propylbenzene" (trade names, manufactured by Tosoh Corporation).
The polymer acid value was determined by the method prescribed in JIS specification (JIS K0070:1992). The glass transition temperature Tg was measured using a differential scanning calorimeter (DSC) DSC6100 (trade name, manufactured by Seiko Instruments).

[Preparation of Ink Composition]

<Synthesis of water-soluble polymer dispersant Q-1>

A monomer feed composition was prepared by mixing methacrylic acid (172 parts), benzyl methacrylate (828 parts), and isopropanol (375 parts). An initiator feed composition was prepared by mixing 2,2-azobis(2-methylbutyronitrile) (22.05 parts) and isopropanol (187.5 parts).

A mixture of the monomer feed composition and the initiator feed composition was added dropwise over 2 hours to isopropanol (187.5 parts) heated to 80°C under a nitrogen atmosphere. After dropwise addition was completed, the mixture was maintained at 80°C for another 4 hours, and then cooled to 25°C.

After being cooled, the solvent was removed under reduced pressure to give a water-soluble resin dispersant Q-1 (water-soluble polymer) having a weight-average molecular weight of about 30000 and an acid value of 112 mg-KOH/g.

Production of Cyan Pigment Dispersion C-1

After 0.8 equivalents of methacrylic acid in the water-soluble polymer dispersant Q-1 (150 parts), obtained above, had been neutralized using a solution of aqueous potassium hydroxide, ion exchange water was also added to adjust to a water-miscible polymer dispersant concentration of 25%, thereby yielding an aqueous water-miscible polymer dispersant solution.

The aqueous water-miscible polymer dispersant solution (124 parts), pigment blue 15:3 (cyan pigment) (48 parts), water (75 parts), and dipropylene glycol (30 parts) were mixed together and dispersed using a bead mill (zirconia beads with bead diameter 0.1 mm φ) until a desired volume average particle size was achieved, and a dispersion of polymer-coated cyan pigment particles at a pigment concentration of 15% (non-crosslinked dispersion C-1) thereby obtained.

Denacol EX-321 (trade name, crosslinking agent manufactured by Nagase ChemteX Corporation) (1.3 parts) and aqueous boric acid solution (boric acid concentration: 4% by mass) (14.3 parts) were added to the non-crosslinked

dispersion C-1 (136 parts), and after being allowed to react for 6.5 hours at 50°C, the solution was cooled to 25°C to obtain crosslinked dispersion C-1. Ion exchange water was then added to the obtained crosslinked dispersion C-1, ultra filtration was performed using a stirring Ultraholder (trade name, manufactured by ADVANTEC Corporation) and an Ultrafilter (Q0500076E (trade name, manufactured by ADVANTEC Corporation) with a cutoff molecular weight of 50000), and, after purifying to the point when the dipropylene glycol concentration in the dispersion was 0.1% by mass or lower, concentration was performed to give a pigment concentration of 15% by mass, thereby obtaining a cyan pigment dispersion C-1. The pigment included in the cyan pigment dispersion C-1 is a polymer-coated pigment (an encapsulated pigment) in which the surface of the pigment is coated with a crosslinked polymer crosslinked by crosslinking agent in the water-soluble polymer dispersant Q-1.

Production of Magenta Pigment Dispersion M-1

A magenta pigment dispersion M-1 was obtained by preparation substantially the same as for the cyan pigment dispersion C-1 preparation, except in that pigment red 122 (magenta pigment) was used as the pigment, in place of the pigment blue 15:3 (cyan pigment) used as a pigment in the preparation of the cyan pigment dispersion C-1.

Production of Yellow Pigment Dispersion Y-1

A yellow pigment dispersion Y-1 was obtained by preparation substantially the same as for the cyan pigment dispersion C-1 preparation, except in that pigment yellow 74 (yellow pigment) was used as the pigment, in place of the pigment blue 15:3 (cyan pigment) used as a pigment in the preparation of the cyan pigment dispersion C-1.

Production of Black Pigment Dispersion K-1

A black pigment dispersion K-1 was obtained by preparation substantially the same as for the cyan pigment dispersion C-1 preparation, except in that carbon black MA-100 (black pigment) was used as the pigment, in place of the pigment blue 15:3 (cyan pigment) used as a pigment in the preparation of the cyan pigment dispersion C-1.

Synthesis of Polymerizable Compound a

The polymerizable compound a, described earlier, was synthesized as described below.

First Process

Tris(hydroxymethyl)aminomethane (manufactured by Tokyo Chemical Industry Co., Ltd.) (121g, 1 equivalent weight), 50% by mass aqueous potassium hydroxide (84 mL), and toluene (423 mL) were added to a 1L three-necked flask provided with a stirrer bar, and stirred. A reaction system temperature of from 20°C to 25°C was maintained using a water bath, and acrylonitrile (397.5g, 7.5 equivalent weights) was added drop-wise over a 2 hour period. After drop-wise addition, stirring was performed for 1.5 hours. Toluene (540 mL) was then added to the reaction system, the reaction mixture transferred to a separating funnel, and the aqueous layer discarded. After drying over magnesium sulfate, the remaining organic layer was then filtered through CELITE, and the solvent distilled off under reduced pressure, to obtain an acrylonitrile adduct. Since good agreement was observed between results of analysis by $^1$H-NMR and MS of the obtained product, and of known substances, the obtained product was used in a subsequent reduction reaction without further purification.

Second Process

The obtained acrylonitrile adduct (24g), Ni catalyst (trade name Raney Nickel 2400, manufactured by W.R. Grace & Co.) (48 g), and 25% by mass aqueous ammonia (water:methanol = 1:1) (600 mL) were placed in a 1L capacity autoclave, a suspension allowed to form, and the reaction vessel sealed. Hydrogen was introduced to the reaction vessel at 10 MPa, and allowed to react at a reaction temperature of 25°C for 16 hours.

The disappearance of the reactants was confirmed by $^1$H-NMR. The reaction mixture was filtered through CELITE and the CELITE washed several times with methanol. A polyamine compound was obtained by distilling off the solvent from the filtrate under reduced pressure. The obtained product was used in the subsequent reaction without further purification.

Third Process

The obtained polyamine compound (30g), $NaHCO_3$ (120g, 14 equivalent weights), dichloromethane (1L), and water (50 mL) were added to a 2L capacity three-necked flask provided with a stirring device, and acrylic acid chloride (92.8g, 10 equivalent weights) was added drop-wise over a 3 hour period in an ice bath. The reaction mixture was then stirred for 3 hours at room temperature. After the disappearance of the reactants was confirmed by $^1H$-NMR, the solvent was distilled off from the reaction mixture under reduced pressure.

The reaction mixture was subsequently dried over magnesium sulfate, filtered through CELITE (registered trademark), and the solvent distilled off under reduced pressure. Finally, the polymerizable compound a, an acrylamide with 4 functional groups (in Formula (1) above, $R^1 = H$, $R^2 = C_3H_6$, $R^3 = CH_2$, $x = y = z = 0$), was obtained as a solid at room temperature by purification by column chromatography (ethyl acetate: methanol = 4:1). The yield of the polymerizable compound a through the third process described above was 40% by mass.

Preparation of Self-dispersing Polymer P-1

A 2L three-necked flask, provided with a mechanical stirrer, a thermometer, a reflux condenser, and a nitrogen gas inlet pipe, was loaded with methyl ethyl ketone (540.0g) and heated to 75°C. With the temperature in the reaction vessel held at 75°C, a mixed solution of methyl methacrylate (108g), isobornyl methacrylate (388.8g), methacrylic acid (43.2g), methyl ethyl ketone (108g), and "V-601" (trade name, manufactured by Wako Pure Chemical Industries, Ltd.) (2.1 g) was added drop-wise at a constant rate such that the drop-wise addition completed in 2 hours. After completion of the drop-wise addition, a solution of "V-601" (1.15g) and methyl ethyl ketone (15.0g) was added, and the reaction mixture stirred at 75°C for 2 hours. A solution of "V-601" (0.54g) and methyl ethyl ketone (15.0g) was then further added, and the reaction mixture stirred for 2 hours at 75°C. The reaction mixture was then heated to 85°C, and after stirring continued for a further 2 hours, a methyl methacrylate/isobornyl methacrylate/methacrylic acid (= 20/72/8 (mass ratio)) copolymer resin solution was obtained.

The weight average molecular weight (Mw) of the obtained copolymer was 60,000, the acid value was 54.2 mg KOH/g, and the glass transition temperature was 124°C.

The resin solution (588.2g) was then weighed out, isopropanol (165g), and 1 mol/L of aqueous sodium hydroxide (120.8 mL) added, and the temperature in the reaction vessel was raised to 80°C. Distilled water (718g) was then added drop-wise at a rate of 20 mL/min to form a water dispersion. The temperature in the reaction vessel was then held at 80°C for 2 hours, 85°C for 2 hours, and 90°C for 2 hours under atmospheric pressure, and solvent distilled off. The isopropanol, the methyl ethyl ketone, and the distilled water were then further distilled off by pressure reduction in the reaction vessel, and a self-dispersing polymer P-1 (25.0% by mass solid content aqueous dispersion) was obtained as the polymer particles.

Preparation of Self-dispersing Polymers P-2 and P-3

The preparations of self-dispersing polymers P-2 and P-3 (both 25.0% by mass solid content aqueous dispersions) were performed in a manner substantially similar to the preparation of the self-dispersing polymer P-1, except in that the monomer used in the preparation of the self-dispersing polymer P-1 was changed to monomers indicated in Table 1 below.

TABLE 1

| Self-dispersing polymer | Copolymerization Monomer Composition | Copolymerization Monomer Fraction (Mass Fraction) | Tg |
|---|---|---|---|
| P-2 | MMA/BMA/BzMA/MAA | 187.2/35/110/28.5 | 93°C |
| P-3 | MMA/PhOEMA/BzA/AA | 216/70/56/18 | 87°C |

Details regarding the monomers in Table 1 are as follows.

- MMA: methyl methacrylate
- BMA: butyl methacrylate
- BzMA: benzyl methacrylate
- MAA: methacrylic acid
- PhOEMA: phenoxyethyl methacrylate
- BzA: benzyl acrylate

- AA: acrylic acid

Production of Cyan Ink

The composition below was mixed, and after filtration using a glass filter (GS-25, trade name, manufactured by ADVANTEC Corporation), filtration was performed using a filter (PVDF membrane, 5 μm pore diameter, manufactured by EMD Millipore Corporation), and a cyan ink was produced.

Cyan Ink C1 Composition

- The above cyan pigment dispersion C-1 (pigment concentration: 12% by mass) 20.8 parts
- Equamide B100 (wetting agent) 3.5 parts
- OLFINE E1010 (trade name, manufactured by Nissin Chemical Industry Co., Ltd., surfactant) 1 part
- Triethanolamine 0.5 parts
- Potassium nitrate 0.05 parts
- The self-dispersing polymer indicated in Table 2 below (25.0% by mass solid content aqueous dispersion) 3 parts
- Ion exchange water Remaining mass to give 100 parts overall [0205] Cyan Ink C2-1 Composition
- The above cyan pigment composition C-1 (pigment concentration: 12% by mass) 20.8 parts
- Hydroxyethyl acrylamide (mono-functional acrylamide) 9.5 parts
- The above polymerizable compound a (multi-functional acrylamide) 9.5 parts
- Equamide B100 (wetting agent) 3.5 parts
- OLFINE E1010 (trade name, manufactured by Nissin Chemical Industry Co., Ltd., surfactant) 1 part
- IRGACURE 2959 (photopolymerization initiator, manufactured by BASF Japan Ltd.) 1 part
- DAROCUR 1173 0.5 parts
- The organic amine indicated in Table 2 below The amount indicated in Table 2
- The inorganic salt indicated in Table 2 below The amount indicated in Table 2
- The self-dispersing polymer indicated in Table 2 below (25.0% by mass solid content aqueous dispersion) 3 parts
- Ion exchange water Remaining mass to give 100 parts overall

Cyan inks C2-2 to C2-11 were prepared in a manner substantially similar to the cyan ink C2-1, using the compositions in Table 2 below.

Production of Ink Compositions of Other Colors

Compositions of magenta, yellow, and black ink were each prepared as inks of other colors. Magenta inks M1 and M2-1 to M2-11 were produced as pigment dispersions, in a manner substantially similar to the cyan inks C1 and C2-1, except in that the magenta pigment dispersion M-1 was used. Yellow inks Y1 and Y2-1 to Y2-11 were also produced as pigment dispersions in a manner substantially similar to the cyan inks C1 and C2-1, except in that the yellow pigment dispersion Y-1 was used. Black inks K1 and K2-1 to K2-11 were also produced as pigment dispersions in a manner substantially similar to that of the cyan inks C1 and C2-1, except in that the black pigment dispersion K-1 was used. The ink compositions are respectively indicated in Table 3 to Table 5.

TABLE 2

| Ink | Organic Amine | | Inorganic Salt | | Self-dispersing polymer | pH of Ink |
|---|---|---|---|---|---|---|
| | Name of Compound | Amount (parts) | Name of Compound | Amount (parts) | | |
| C1 | Triethanolamine | 0.5 | Potassium nitrate | 0.05 | P-1 | 8.6 |
| C2-1 | Triethanolamine | 0.5 | Potassium nitrate | 0.05 | P-1 | 8.6 |
| C2-2 | Triethanolamine | 0.5 | Potassium nitrate | 0.05 | P-2 | 8.5 |

(continued)

| Ink | Organic Amine | | Inorganic Salt | | Self-dispersing polymer | pHof Ink |
|---|---|---|---|---|---|---|
| | Name of Compound | Amount (parts) | Name of Compound | Amount (parts) | | |
| C2-3 | Diethanolamine | 0.5 | Potassium nitrate | 0.05 | P-1 | 8.3 |
| C2-4 | Tris(hydroxymethyl) aminomethane | 1.0 | Potassium nitrate | 0.05 | P-1 | 12.8 |
| C2-5 | Triethanolamine | 0.5 | Potassium chloride | 0.05 | P-1 | 7.5 |
| C2-6 | none | none | Potassium nitrate | 0.05 | P-1 | 7.3 |
| C2-7 | Ammonium | 0.5 | Potassium nitrate | 0.05 | P-1 | 8.8 |
| C2-8 | Chloramine | 0.5 | Potassium nitrate | 0.05 | P-1 | 8.5 |
| C2-9 | Triethanolamine | 0.5 | Potassium nitrate | 0.05 | P-3 | 8.8 |
| C2-10 | Triethanolamine | 0.5 | none | none | P-1 | 8.9 |
| C2-11 | Triethanolamine | 0.5 | Potassium benzoate | 0.05 | P-1 | 8.6 |

TABLE 3

| Ink | Organic Amine | | Inorganic Salt | | Self-dispersing polymer | pHof Ink |
|---|---|---|---|---|---|---|
| | Name of Compound | Amount (parts) | Name of Compound | Amount (parts) | | |
| M1 | Triethanolamine | 0.5 | Potassium nitrate | 0.05 | P-1 | 8.5 |
| M2-1 | Triethanolamine | 0.5 | Potassium nitrate | 0.05 | P-1 | 8.6 |
| M2-2 | Triethanolamine | 0.5 | Potassium nitrate | 0.05 | P-2 | 8.4 |
| M2-3 | Diethanolamine | 0.5 | Potassium nitrate | 0.05 | P-1 | 8.5 |
| M2-4 | Tris(hydroxymethyl) aminomethane | 1.0 | Potassium nitrate | 0.05 | P-1 | 12.7 |
| M2-5 | Triethanolamine | 0.5 | Potassium chloride | 0.05 | P-1 | 7.5 |
| M2-6 | none | none | Potassium nitrate | 0.05 | P-1 | 7.6 |
| M2-7 | Ammonium | 0.5 | Potassium nitrate | 0.05 | P-1 | 8.7 |
| M2-8 | Chloramine | 0.5 | Potassium nitrate | 0.05 | P-1 | 8.7 |
| M2-9 | Triethanolamine | 0.5 | Potassium nitrate | 0.05 | P-3 | 8.8 |

(continued)

| Ink | Organic Amine | | Inorganic Salt | | Self-dispersing polymer | pHof Ink |
|---|---|---|---|---|---|---|
| | Name of Compound | Amount (parts) | Name of Compound | Amount (parts) | | |
| M2-10 | Triethanolamine | 0.5 | none | none | P-1 | 8.9 |
| M2-11 | Triethanolamine | 0.5 | Potassium benzoate | 0.05 | P-1 | 8.6 |

TABLE 4

| Ink | Organic Amine | | Inorganic Salt | | Self-dispersing polymer | pHof Ink |
|---|---|---|---|---|---|---|
| | Name of Compound | Amount (parts) | Name of Compound | Amount (parts) | | |
| Y1 | Triethanolamine | 0.5 | Potassium nitrate | 0.05 | P-1 | 8.5 |
| Y2-1 | Triethanolamine | 0.5 | Potassium nitrate | 0.05 | P-1 | 8.6 |
| Y2-2 | Triethanolamine | 0.5 | Potassium nitrate | 0.05 | P-2 | 8.6 |
| Y2-3 | Diethanolamine | 0.5 | Potassium nitrate | 0.05 | P-1 | 8.5 |
| Y2-4 | Tris(hydroxymethyl) aminomethane | 1.0 | Potassium nitrate | 0.05 | P-1 | 12.8 |
| Y2-5 | Triethanolamine | 0.5 | Potassium chloride | 0.05 | P-1 | 7.5 |
| Y2-6 | none | none | Potassium nitrate | 0.05 | P-1 | 7.5 |
| Y2-7 | Ammonium | 0.5 | Potassium nitrate | 0.05 | P-1 | 8.8 |
| Y2-8 | Chloramine | 0.5 | Potassium nitrate | 0.05 | P-1 | 8.7 |
| Y2-9 | Triethanolamine | 0.5 | Potassium nitrate | 0.05 | P-3 | 8.6 |
| Y2-10 | Triethanolamine | 0.5 | none | none | P-1 | 8.9 |
| Y2-11 | Triethanolamine | 0.5 | Potassium benzoate | 0.05 | P-1 | 8.6 |

TABLE 5

| Ink | Organic Amine | | Inorganic Salt | | Self-dispersing polymer | pHof Ink |
|---|---|---|---|---|---|---|
| | Name of Compound | Amount (parts) | Name of Compound | Amount (parts) | | |
| K1 | Triethanolamine | 0.5 | Potassium nitrate | 0.05 | P-1 | 8.6 |
| K2-1 | Triethanolamine | 0.5 | Potassium nitrate | 0.05 | P-1 | 8.6 |

(continued)

| Ink | Organic Amine | | Inorganic Salt | | Self-dispersing polymer | pH of Ink |
|---|---|---|---|---|---|---|
| | Name of Compound | Amount (parts) | Name of Compound | Amount (parts) | | |
| K2-2 | Triethanolamine | 0.5 | Potassium nitrate | 0.05 | P-2 | 8.4 |
| K2-3 | Diethanolamine | 0.5 | Potassium nitrate | 0.05 | P-1 | 8.5 |
| K2-4 | Tris(hydroxymethyl) aminomethane | 1.0 | Potassium nitrate | 0.05 | P-1 | 12.8 |
| K2-5 | Triethanolamine | 0.5 | Potassium chloride | 0.05 | P-1 | 7.5 |
| K2-6 | none | none | Potassium nitrate | 0.05 | P-1 | 7.5 |
| K2-7 | Ammonium | 0.5 | Potassium nitrate | 0.05 | P-1 | 8.8 |
| K2-8 | Chloramine | 0.5 | Potassium nitrate | 0.05 | P-1 | 8.8 |
| K2-9 | Triethanolamine | 0.5 | Potassium nitrate | 0.05 | P-3 | 8.6 |
| K2-10 | Triethanolamine | 0.5 | none | none | P-1 | 8.9 |
| K2-11 | Triethanolamine | 0.5 | Potassium benzoate | 0.05 | P-1 | 8.6 |

Preparation of Treatment Liquid E-1

Treatment liquid E-1 was prepared by mixing the components of the following composition. The pH of the treatment liquid was 1.1.

Treatment Liquid Composition

- Malonic acid (manufactured by Wako Pure Chemical Industries, Ltd.) 25%
- Diethylene glycol monomethyl ether (manufactured by Wako Pure Chemical Industries, Ltd.) 20%
- EMULGEN P109 (trade name, manufactured by Kao Corporation, nonionic surfactant) 1%
- Ion exchange water 54%

Preparation of Treatment Liquid E-2

Treatment liquid E-2 was prepared by mixing the components of the following composition. The pH of the treatment liquid was 0.1.

Treatment liquid Composition

- Malonic acid (manufactured by Wako Pure Chemical Industries, Ltd.) 45%
- Diethylene glycol monomethyl ether (manufactured by Wako Pure Chemical Industries, Ltd.) 20%
- EMULGEN P109 (trade name, manufactured by Kao Corporation, nonionic surfactant) 1%
- Ion exchange water 34%

Preparation of Treatment Liquid E-3

Treatment liquid E-3 was prepared by mixing the components of the following composition. The pH of the treatment liquid was 0.5.

Treatment liquid Composition

- Malonic acid (manufactured by Wako Pure Chemical Industries, Ltd.) 35%
- Diethylene glycol monomethyl ether (manufactured by Wako Pure Chemical Industries, Ltd.) 20%
- EMULGEN P109 (trade name, manufactured by Kao Corporation, nonionic surfactant) 1%
- Ion exchange water 44%

Image Forming (Inkjet Recording)

First, as illustrated in Fig. 1, an ink jet device was prepared including, disposed sequentially in a conveying direction of a recording medium (the direction of the arrows in Fig. 1): a treatment liquid application section 12 provided with a treatment liquid jetting head 12S that jets treatment liquid, a treatment liquid drying zone 13 that dries the applied treatment liquid; an ink jetting section 14 that jets each ink composition; an ink drying zone 15 that dries the jetted ink compositions; and a UV irradiation section 16 provided with a UV irradiation lamp 16S capable of irradiating ultraviolet rays (UV). Although not illustrated, the treatment liquid drying zone 13 was provided with an air blowing apparatus that dries by delivering drying air to the recording face side of the recording medium, and an infrared heater was provided at the non-recording face side of the recording medium. Configuration of the jetting head was thereby made to enable evaporation (drying) of 70% by mass or more of the water in the treatment liquid by regulating the temperature/air flow for 900 ms following the start of treatment liquid application by the treatment liquid application section 12. A black ink jetting head 30K, a cyan ink jetting head 30C, a magenta jetting head 30M, and a yellow ink jetting head 30Y were disposed in the ink jetting section 14. Each head was a 1200 dpi/10 inch width super drop method full line head (drive frequency: 25 kHz), configured to enable recording by jetting each color along the principal scanning direction with a single pass.

A reservoir tank (not illustrated) connected to the treatment liquid jetting head 12S was charged with the treatment liquid, and a reservoir tank (not illustrated) connected to the cyan ink jetting head 30C was charged with one out of the cyan inks C1, and C2-1 to C2-11. An image was formed by sequentially impacting droplets of the treatment liquid and the ink. The amount of the treatment liquid applied to the recording medium at this time was 1.5 $mL/m^2$.
OK Top Coat + (trade name, manufactured by Oji Paper Co., Ltd.) was used as the recording medium.
Cyan ink was jetted from the heads with a resolution of 1200 dots per inch (dpi) $\times$ 1200 dpi and an ink droplet volume of 2.4 pL during image forming.
In the following image formation, images were formed by sequentially applying treatment liquid and cyan ink to a sample of the recording medium cut to A5 size.

Specifically, image forming was carried out as follows.
First, after jetting (applying) the treatment liquid onto the recording medium from the treatment liquid jetting head 12S in a single pass, treatment liquid drying was performed at the treatment liquid drying zone 13 such that passage through the treatment liquid drying zone occurred up until 900 msec. after the start of treatment liquid jetting. In the treatment liquid drying zone 13, treatment liquid having impacted as droplets was dried by the air blowing apparatus blowing a 120°C, 5 m/s hot air flow to the recording face for 5 seconds while heating was performed from the opposite side to the side of the droplet-impact face (i.e. the back face) by the infrared heater to give a surface temperature of from 40°C to 45°C. Subsequently, a dot image was obtained by applying cyan ink C1 from the jetting head 30C in a single pass at a 20% dot ratio onto the side of the recording medium face applied with the treatment liquid (the treatment-liquid-application face).
Similarly in the ink drying zone 15, the image was dried by the air blowing apparatus blowing a 5 m/s hot air flow onto the recording face for 5 seconds while heating was performed by the infrared heater from the opposite side to the side of the ink droplet-impact face (from the back face) of the recording medium on which the image was formed. At this time, the conveying speed was regulated such that the time from the moment of impact of the cyan ink droplets on the recording medium, until conveyance to the ink drying zone 15 and drying being initiated, was approximately one second.
The dried image was UV cured in the UV irradiation section 16 by irradiation with UV light (a metal halide lamp manufactured by EYE GRAPHICS Co., Ltd., peak irradiation wavelength 365 nm) so as to give a total accumulated irradiation amount of 2 $J/cm^2$.
An image sample was obtained for evaluation in accordance with the above.

Evaluation

The following evaluations were performed on image samples for evaluation. The evaluation results are indicated in Table 6 to Table 9 below.

Ink Mist Suppression Evaluation

The dot image in the above image sample was viewed at 10× magnification using general use image processing apparatus DA-6000 (trade name, manufactured by Oji Scientific Instruments), and the satellite formation was evaluated according to the following evaluation criteria.

Evaluation Criteria

AA: No satellites observed, and no problems of any kind.
A: Satellite occurrence ratio of less than 1%, with no problems when used in practice.
B: Satellite occurrence ratio of from 1% to less than 3%, giving concerns regarding trouble when used in practice.
C: Satellite occurrence ratio of from 3% to less than 10%, causing problems when used in practice.
D: Satellite occurrence ratio of 10% or more, causing serious problems when used in practice.

Carbon Dioxide Gas Resistance (Jetting Stability)

After continuous printing for 30 minutes at a printing speed of 2700 solid images per hour using the image forming method above with ink droplet volume of 2.4 pL, a parallel line pattern sample of a 75 dpi × 2400 dpi line image was produced using a 96 nozzle jetting head. The image sample was examined using general purpose image processing apparatus DA-6000, and the jetting nozzle count, andjetting-curvature were evaluated according to the following evaluation criteria.

Evaluation Conditions

(1) An ink jetting ratio of 90% or above was classified as a pass. In this case, (2) and (3) below were also determined as a pass.
(2) An ink jetting ratio of 85% or above was classified as a pass. In this case, (3) below was determined as a pass.
(3) An ink jetting ratio of 80% or above was classified as a pass.
(4) Absence of jetting-curvature was classified as a pass.

Ink Jetting Ratio Measurement Method

The produced line image sample was measured, and the jetting ratio calculated according to the following formula.

$$\text{jetting ratio (\%)} = \text{(jetting nozzle count)} / \text{(total nozzle count)} \times 100$$

Jetting-Curvature Measurement Method

The position of the width direction centers of lines in the parallel line pattern were measured, and the standard deviation $\sigma$ of the shift from the theoretical central position calculated. Jetting-curvature is considered to have occurred in cases in which $\sigma$ is 5 or greater.

Evaluation Criteria

Next, evaluation was made according to the following criteria based on results of jetting stability.

AA: Cases in which all 4 of jetting stability criteria (1) to (4) were passed.
A: Cases in which 3 of jetting stability criteria (1) to (4) were passed.
B: Cases in which 2 of jetting stability criteria (1) to (4) were passed.
C: Cases in which 1 of jetting stability criteria (1) to (4) was passed.
D: Cases in which none of the 4 jetting stability criteria (1) to (4) were passed.

Carbon Dioxide Gas Resistance

15g of each prepared ink composition was placed in 30 mL PET vessels, and placed in a sample rack. After a 30L plastic vessel placed with 30g of dry ice filled with carbon dioxide gas, the sample rack set with the PET vessels was inserted therein. A lid was lightly placed on the plastic vessel, which was left to stand for 30 minutes. After being left to stand, the samples were removed, film generation on the ink surfaces examined, and evaluation was carried out according to the following evaluation criteria.

Evaluation Criteria

AA: No film generation observed, with no problems of any kind.
A: A quite thin film forms but disappears on mixing the ink, has fluidity and no problems of any kind.
B: A film of from 0.2 mm to less than 1 mm is formed. Fluid, but concerns regarding when used in practice.
C: A film of from 1 mm to 2 mm formed. Problems during practical use.
D: Solidification in the interior, and serious problems during practical use.

Ink Stability

Each prepared ink composition was placed in a PET vessel and stoppered, and stored thermostatically heated at 60°C for 14 days. The viscosity was measured after storage. The viscosity of the ink composition was also measured using the same method before storage. The viscosity of the ink composition was measured at 25°C using a VISCOMETER TV-22 (trade name, manufactured by Toki Sangyo Co., Ltd), and evaluation carried out according to the following evaluation criteria.

AA: Viscosity changed, and is within ±3% of the value before storage. No problems of any kind.
A: Viscosity changed, and is outside ±3% and within ±5% of the value before storage. No problems.
B: Viscosity changed, and is outside ±5% and within ±8% of the value before storage. Concerns regarding practical use.
C: Viscosity changed, and is outside ±8% and within ±10% of the value before storage. Problems during practical use.
D: Viscosity changed, and is outside ±10% of the value before storage. Serious problems during practical use.

Uneven Glossiness of Image Portion

100% solid images of approximately 100 mm × 150 mm were recorded using the image forming method above. The solid images were visually examined immediately after forming, and uneven glossiness of the image portions was evaluated according to the following evaluation criteria.

Evaluation Criteria

AA: No uneven glossiness observed at all, for all 10 sheets of images.
A: Uneven glossiness observed for 1 sheet out of 10 sheets of images.
B: Uneven glossiness observed for from 2 to 3 sheets out of 10 sheets of images.
C: Uneven glossiness observed for from 4 to 5 sheets out of 10 sheets of images.
D: Uneven glossiness observed for 6 or more sheets out of 10 sheets of images.

Mottled Surface

40% dot ratio images were recorded at approximately 100 mm × 150 mm using the image forming method above. The dot images were visually examined immediately after, and the level of mottled surface evaluated according to the following evaluation criteria.

Evaluation Criteria

AA: No mottled surface observed at all, for all 10 sheets of images.
A: Mottled surface observed for 1 image out of 10 sheets of images.
B: Mottled surface observed for from 2 to 3 sheets out of 10 sheets of images.
C: Mottled surface observed for from 4 to 5 sheets out of 10 sheets of images.
D: Mottled surface observed for 6 or more sheets out of 10 sheets of images.

TABLE 6

| Ink set | Exp./ C. Exp. | Ink composition | Kind of Amine | Tg of Polymer particles (°C) | Kind of Salt | Treatment Liquid | Ink stability | Jetting stability | CDGR | I.M.S. | U.G.I | Mot.S. |
|---|---|---|---|---|---|---|---|---|---|---|---|---|
| 1 | Exp. | C1 | Triethanolamine | P-1 (124°C) | Potassium nitrate | E-1 | AA | AA | AA | AA | A | A |
| 2 | Exp. | C2-1 | Triethanolamine | P-1 (124°C) | Potassium nitrate | E-1 | AA | AA | AA | AA | A | A |
| 3 | Exp. | C2-1 | Triethanolamine | P-1 (124°C) | Potassium nitrate | E-2 | AA | AA | A | AA | AA | AA |
| 4 | Exp. | C2-1 | Triethanolamine | P-1 (124°C) | Potassium nitrate | E-3 | AA | AA | A | AA | AA | AA |
| 5 | Exp. | C2-2 | Triethanolamine | P-2 (93°C) | Potassium nitrate | E-1 | AA | AA | AA | A | A | A |
| 6 | Exp. | C2-3 | Diethanolamine | P-1 (124°C) | Potassium nitrate | E-1 | AA | A | A | AA | A | A |
| 7 | Exp. | C2-4 | Tris(hydroxymethyl) aminomethane | P-1 (124°C) | Potassium nitrate | E-1 | AA | A | AA | AA | A | A |
| 8 | Exp. | C2-5 | Triethanolamine | P-1 (124°C) | Potassium chloride | E-1 | A | A | A | AA | A | A |
| 9 | C. Exp. | C2-6 | none | P-1 (124°C) | Potassium nitrate | E-1 | AA | D | D | AA | A | A |
| 10 | C. Exp. | C2-7 | Ammonia | P-1 (124°C) | Potassium nitrate | E-1 | AA | C | C | AA | C | C |
| 11 | C. Exp. | C2-8 | Chloramine | P-1 (124°C) | Potassium nitrate | E-1 | C | C | C | AA | C | A |
| 12 | C. Exp. | C2-9 | Triethanolamine | P-3 (87°C) | Potassium nitrate | E-1 | AA | AA | AA | C | A | A |
| 13 | C. Exp. | C2-10 | Triethanolamine | P-1 (124°C) | none | E-1 | C | A | AA | D | A | A |
| 14 | C. Exp. | C2-11 | Triethanolamine | P-1 (124°C) | Potassium benzoate | E-1 | D | D | A | A | A | A |

TABLE 7

| Ink set | Exp./ C. Exp. | Ink composition | Kind of Amine | Tg of Polymer particles (°C) | Kind of Salt | Treatment Liquid | Ink stability | Jetting stability | CDGR | I.M.S. | U.G.I | Mot.S. |
|---|---|---|---|---|---|---|---|---|---|---|---|---|
| 15 | Exp. | M1 | Triethanolamine | P-1 (124°C) | Potassium nitrate | E-1 | AA | AA | AA | AA | A | A |
| 16 | Exp. | M2-1 | Triethanolamine | P-1 (124°C) | Potassium nitrate | E-1 | AA | AA | AA | AA | A | A |
| 17 | Exp. | M2-1 | Triethanolamine | P-1 (124°C) | Potassium nitrate | E-2 | AA | AA | A | AA | AA | AA |
| 18 | Exp. | M2-1 | Triethanolamine | P-1 (124°C) | Potassium nitrate | E-3 | AA | AA | A | AA | AA | AA |
| 19 | Exp. | M2-2 | Triethanolamine | P-2 (93°C) | Potassium nitrate | E-1 | AA | AA | AA | A | A | A |
| 20 | Exp. | M2-3 | Diethanolamine | P-1 (124°C) | Potassium nitrate | E-1 | AA | A | A | AA | A | A |
| 21 | Exp. | M2-4 | Tris(hydroxymethyl) aminomethane | P-1 (124°C) | Potassium nitrate | E-1 | AA | A | AA | AA | A | A |
| 22 | Exp. | M2-5 | Triethanolamine | P-1 (124°C) | Potassium chloride | E-1 | A | A | AA | AA | A | A |
| 23 | C. Exp. | M2-6 | none | P-1 (124°C) | Potassium nitrate | E-1 | AA | D | D | AA | A | A |
| 24 | C. Exp. | M2-7 | Ammonia | P-1 (124°C) | Potassium nitrate | E-1 | AA | C | C | AA | C | C |
| 25 | C. Exp. | M2-8 | Chloramine | P-1 (124°C) | Potassium nitrate | E-1 | C | C | C | AA | C | A |
| 26 | C. Exp. | M2-9 | Triethanolamine | P-3 (87°C) | Potassium nitrate | E-1 | AA | AA | AA | C | A | A |
| 27 | C. Exp. | M2-10 | Triethanolamine | P-1 (124°C) | none | E-1 | C | A | AA | D | A | A |
| 28 | C. Exp. | M2-11 | Triethanolamine | P-1 (124°C) | Potassium benzoate | E-1 | D | D | A | A | A | A |

TABLE 8

| Ink set | Exp./ C. Exp. | Ink composition | Kind of Amine | Tg of Polymer particles (°C) | Kind of Salt | Treatment Liquid | Ink stability | Jetting stability | CDGR | I.M.S. | U.G.I | Mot.S. |
|---|---|---|---|---|---|---|---|---|---|---|---|---|
| 29 | Exp. | Y1 | Triethanolamine | P-1 (124°C) | Potassium nitrate | E-1 | AA | AA | AA | AA | A | A |
| 30 | Exp. | Y2-1 | Triethanolamine | P-1 (124°C) | Potassium nitrate | E-1 | AA | AA | AA | AA | A | A |
| 31 | Exp. | Y2-1 | Triethanolamine | P-1 (124°C) | Potassium nitrate | E-2 | AA | AA | A | AA | AA | AA |
| 32 | Exp. | Y2-1 | Triethanolamine | P-1 (124°C) | Potassium nitrate | E-3 | AA | AA | A | AA | AA | AA |
| 33 | Exp. | Y2-2 | Triethanolamine | P-2 (93°C) | Potassium nitrate | E-1 | AA | AA | AA | A | A | A |
| 34 | Exp. | Y2-3 | Diethanolamine | P-1 (124°C) | Potassium nitrate | E-1 | AA | A | A | AA | A | A |
| 35 | Exp. | Y2-4 | Tris(hydroxymethyl) aminomethane | P-1 (124°C) | Potassium nitrate | E-1 | AA | A | AA | AA | A | A |
| 36 | Exp. | Y2-5 | Triethanolamine | P-1 (124°C) | Potassium chloride | E-1 | A | AA | A | AA | A | A |
| 37 | C. Exp. | Y2-6 | none | P-1 (124°C) | Potassium nitrate | E-1 | AA | D | D | AA | A | A |
| 38 | C. Exp. | Y2-7 | Ammonia | P-1 (124°C) | Potassium nitrate | E-1 | AA | C | C | AA | C | C |
| 39 | C. Exp. | Y2-8 | Chloramine | P-1 (124°C) | Potassium nitrate | E-1 | C | C | C | AA | C | A |
| 40 | C. Exp. | Y2-9 | Triethanolamine | P-3 (87°C) | Potassium nitrate | E-1 | AA | AA | AA | C | A | A |
| 41 | C. Exp. | Y2-10 | Triethanolamine | P-1 (124°C) | none | E-1 | C | A | AA | D | A | A |
| 42 | C. Exp. | Y2-11 | Triethanolamine | P-1 (124°C) | Potassium benzoate | E-1 | D | D | A | A | A | A |

TABLE 9

| Ink set | Exp./ C. Exp. | Ink composition | Kind of Amine | Tg of Polymer particles (°C) | Kind of Salt | Treatment Liquid | Ink stability | Jetting stability | CDGR | I.M.S. | U.G.I | Mot.S. |
|---|---|---|---|---|---|---|---|---|---|---|---|---|
| 43 | Exp. | K 1 | Triethanolamine | P-1 (124°C) | Potassium nitrate | E-1 | AA | AA | AA | AA | A | A |
| 44 | Exp. | K 2-1 | Triethanolamine | P-1 (124°C) | Potassium nitrate | E-1 | AA | AA | AA | AA | A | A |
| 45 | Exp. | K 2-1 | Triethanolamine | P-1 (124°C) | Potassium nitrate | E-2 | AA | AA | A | AA | AA | AA |
| 46 | Exp. | K 2-1 | Triethanolamine | P-1 (124°C) | Potassium nitrate | E-3 | AA | AA | A | AA | AA | AA |
| 47 | Exp. | K 2-2 | Triethanolamine | P-2 (93°C) | Potassium nitrate | E-1 | AA | AA | AA | A | A | A |
| 48 | Exp. | K 2-3 | Diethanolamine | P-1 (124°C) | Potassium nitrate | E-1 | AA | A | A | AA | A | A |
| 49 | Exp. | K 2-4 | Tris(hydroxymethyl) aminomethane | P-1 (124°C) | Potassium nitrate | E-1 | AA | A | AA | AA | A | A |
| 50 | Exp. | K 2-5 | Triethanolamine | P-1 (124°C) | Potassium chloride | E-1 | A | A | A | AA | A | A |
| 51 | C. Exp. | K 2-6 | none | P-1 (124°C) | Potassium nitrate | E-1 | AA | D | D | AA | A | A |
| 52 | C. Exp. | K 2-7 | Ammonia | P-1 (124°C) | Potassium nitrate | E-1 | AA | C | C | AA | C | C |
| 53 | C. Exp. | K 2-8 | Chloramine | P-1 (124°C) | Potassium nitrate | E-1 | C | C | C | AA | C | A |
| 54 | C. Exp. | K 2-9 | Triethanolamine | P-3 (87°C) | Potassium nitrate | E-1 | AA | A | AA | C | A | A |
| 55 | C. Exp. | K 2-10 | Triethanolamine | P-1 (124°C) | none | E-1 | C | A | AA | D | A | A |
| 56 | C. Exp. | K 2-11 | Triethanolamine | P-1 (124°C) | Potassium benzoate | E-1 | D | D | A | A | A | A |

In tables 6 to 9, the abbreviation "Exp." represents "Example", the abbreviation "C. Exp." represents "Comparative Example", the abbreviation "CDGR" represents "Carbon Dioxide Gas Resistance", the abbreviation "I.M.S." represents "Ink Mist Suppression", the abbreviation "U.G.I" represents "Uneven Glossiness of Image Portion", and the abbreviation "Mot.S." represents "Mottled Surface".

The following is apparent from the results of Table 6 to Table 9.
The inkjet ink sets 1 to 8 according to the invention exhibited only a small change in viscosity of the ink even when the respective ink compositions were stored for a long duration, have excellent jetting stability, generated only small amounts of insoluble matter (film) even when reacting with carbon dioxide gas, and also suppressed generation of satellite droplets. This thereby enabled image forming with excellent image quality.
In contrast thereto, the ink set 9 that included the ink composition C2-6, that does not include an organic amine, exhibited inferior ink jetting stability, and generated a large amount of insoluble matter on reaction with carbon dioxide gas. The ink set 10 including the ink composition C2-7, that included ammonia in place of an organic amine, exhibited inferior ink jetting stability, and generated much insoluble matter on reaction with carbon dioxide gas, albeit less so than with the ink set 9. The ink set 11 including the ink composition C2-8, that included chloramine in place of the organic amine, exhibited even more inferior ink stability than ink set 10.
Moreover, the ink set 12 including the ink composition C2-9, that included polymer particles with a Tg lower than 90°C as the polymer particles, generated many satellite droplets, and only images of inferior image quality were obtainable. The ink set 13 including the ink composition C2-10, that did not include an inorganic salt, exhibited noticeably inferior ink stability, and generated many satellites. The ink set 14 including the ink composition C2-11, that includes potassium benzoate in place of an inorganic salt, exhibited noticeably inferior ink stability, and generated much insoluble matter on reaction with carbon dioxide gas. Substantially the same can be said for each of the other inks: magenta, yellow, and black.

## Claims

1. An inkjet ink set comprising:

   an ink composition comprising water, a colorant, polymer particles having a glass transition temperature of 90°C or higher, an organic amine and an inorganic salt; and
   a treatment liquid that comprises an acidic compound and causes aggregation when the treatment liquid comes into contact with the ink composition.

2. The inkjet ink set according to claim 1, wherein the organic amine is an aminoalcohol.

3. The inkjet ink set according to claim 1 or claim 2, wherein the organic amine is a triethanolamine.

4. The inkjet ink set according to anyone of claims 1 to 3, wherein the inorganic salt is at least one selected from the group consisting of an alkali metal salt and an alkali earth metal salt.

5. The inkjet ink set according to anyone of claims 1 to 4, wherein the inorganic salt is at least one selected from the group consisting of a hydrochloride salt and a nitrate salt.

6. The inkjet ink set according to anyone of claims 1 to 5, wherein the inorganic salt is at least one selected from the group consisting of lithium chloride, lithium nitrate, potassium chloride and potassium nitrate.

7. The inkjet ink set according to anyone of claims 1 to 6, wherein the polymer particles have a glass transition temperature of 120°C or higher.

8. The inkjet ink set according to anyone of claims 1 to 7, wherein a pH of the ink composition is in a range of from 7.5 to 13.0 and a pH of the treatment liquid is in a range of from 0.1 to 4.0.

9. The inkjet ink set according to anyone of claims 1 to 8, wherein a pH of the ink composition is in a range of from 7.5 to 13.0 and a pH of the treatment liquid is in a range of from 0.1 to 0.5.

10. The inkjet ink set according to anyone of claims 1 to 9, wherein the ink composition further comprises a polymerizable compound.

11. The inkjet ink set according to claim 10, wherein the polymerizable compound is a (meth)acrylamide compound represented by the following Formula (1):

Formula (1)

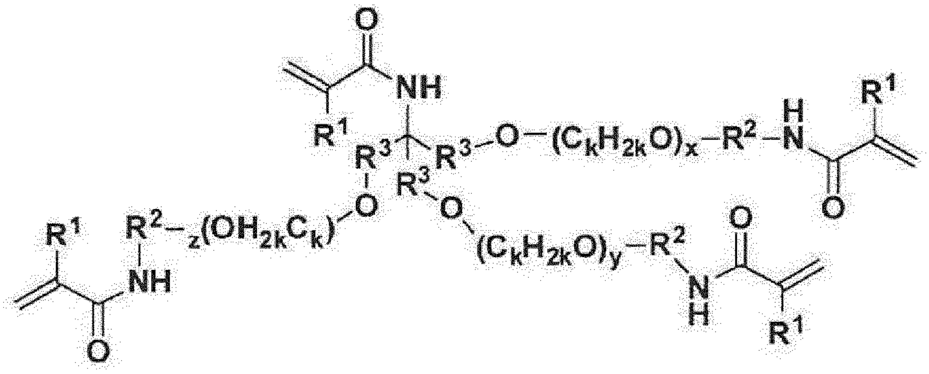

wherein, in Formula (1), $R^1$ represents a hydrogen atom or a methyl group; $R^2$ represents a straight chain or branched alkylene group having from 2 to 4 carbon atoms, provided with a structure in which the oxygen atom and the nitrogen atom, which are bound to both ends of the $R^2$, are not bound to the same carbon atom in $R^2$; $R^3$ represents a bivalent linking group; k represents 2 or 3; each of x, y, and z independently represents an integer from 0 to 6, and the sum x + y + z equals a value from 0 to 18.

12. The inkjet ink set according to claim 11, wherein the ink composition further comprises a polymerization initiator.

13. Use of the inkjet ink set according to anyone of claims 1 to 12, for applying onto a recording medium comprising a base paper and a coat layer containing an inorganic pigment to form an image.

14. An image forming method comprising:

applying the ink composition of the inkjet ink set according to anyone of claims 1 to 13 onto a recording medium comprising a base paper and a coat layer containing an inorganic pigment to form an image by an inkjet method; and
applying the treatment liquid of the inkjet ink set onto the recording medium.

15. The image forming method according to claim 14, wherein the ink composition is applied after the treatment liquid has been applied onto the recording medium.

## Patentansprüche

1. Tintenstrahl-Tintenset aufweisend:

eine Tintenzusammensetzung, die Wasser, ein Farbmittel, Polymerpartikel mit einer Glasübergangstemperatur von 90 °C oder höher, ein organisches Amin und ein anorganisches Salz aufweist; und
eine Behandlungsflüssigkeit, die eine saure Verbindung aufweist und eine Aggregation bewirkt, wenn die Behandlungsflüssigkeit mit der Tintenzusammensetzung in Kontakt kommt.

2. Tintenstrahl-Tintenset nach Anspruch 1, wobei das organische Amin ein Aminoalkohol ist.

3. Tintenstrahl-Tintenset nach Anspruch 1 oder Anspruch 2, wobei das organische Amin ein Triethanolamin ist.

4. Tintenstrahl-Tintenset nach einem der Ansprüche 1 bis 3, wobei das anorganische Salz mindestens ein Salz ist, das ausgewählt ist aus der Gruppe, die aus einem Alkalimetallsalz und einem Erdalkalimetallsalz besteht.

5. Tintenstrahl-Tintenset nach einem der Ansprüche 1 bis 4, wobei das anorganische Salz mindestens ein Salz ist,

das ausgewählt ist aus der Gruppe, die aus einem Hydrochloridsalz und einem Nitratsalz besteht.

**6.** Tintenstrahl-Tintenset nach einem der Ansprüche 1 bis 5, wobei das anorganische Salz mindestens ein Salz ist, das ausgewählt ist aus der Gruppe, die aus Lithiumchlorid, Lithiumnitrat, Kaliumchlorid und Kaliumnitrat besteht.

**7.** Tintenstrahl-Tintenset nach einem der Ansprüche 1 bis 6, wobei die Polymerpartikel eine Glasübergangstemperatur von 120 °C oder höher haben.

**8.** Tintenstrahl-Tintenset nach einem der Ansprüche 1 bis 7, wobei ein pH der Tintenzusammensetzung in einem Bereich von 7,5 bis 13,0 ist, und ein pH der Behandlungsflüssigkeit in einem Bereich von 0,1 bis 4,0 ist.

**9.** Tintenstrahl-Tintenset nach einem der Ansprüche 1 bis 8, wobei ein pH der Tintenzusammensetzung in einem Bereich von 7,5 bis 13,0 ist, und ein pH der Behandlungsflüssigkeit in einem Bereich von 0,1 bis 0,5 ist.

**10.** Tintenstrahl-Tintenset nach einem der Ansprüche 1 bis 9, wobei die Tintenzusammensetzung außerdem eine polymerisierbare Verbindung aufweist.

**11.** Tintenstrahl-Tintenset nach Anspruch 10, wobei die polymerisierbare Verbindung eine (Meth)acrylamidverbindung ist, die repräsentiert wird durch die folgende Formel (1):

Formel (1)

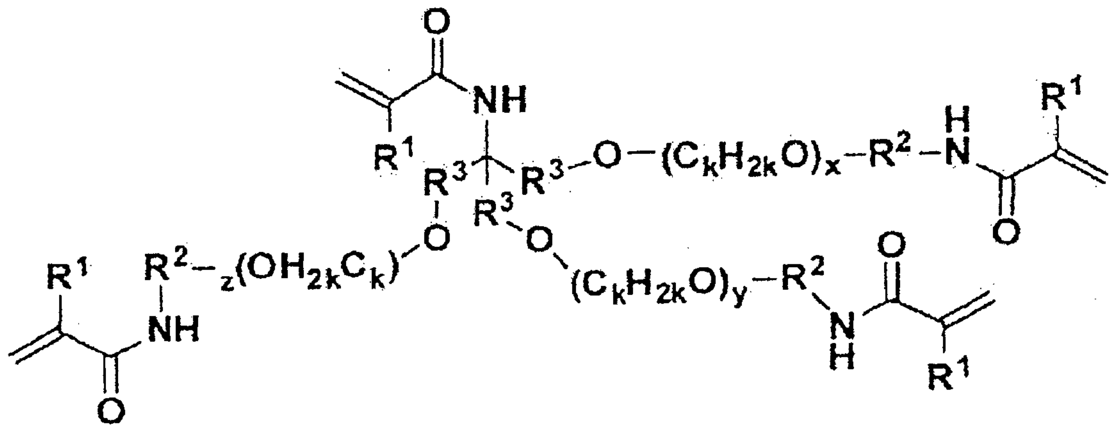

wobei in Formel (1), $R^1$ ein Wasserstoffatom oder eine Methylgruppe repräsentiert; $R^2$ eine geradkettige oder verzweigte Alkylengruppe mit 2 bis 4 Kohlenstoffatomen, die mit einer Struktur ausgestattet ist, in der das Sauerstoffatom und das Stickstoffatom, die an beide Enden von $R^2$ gebunden sind, nicht an das selbe Kohlenstoffatom in $R^2$ gebunden sind, repräsentiert;
$R^3$ eine zweiwertige Verbindungsgruppe repräsentiert; k 2 oder 3 repräsentiert; x, y und z jeweils unabhängig eine ganze Zahl von 0 bis 6 repräsentiert, und die Summe x + y + z gleich einem Wert von 0 bis 18 ist.

**12.** Tintenstrahl-Tintenset nach Anspruch 11, wobei die Tintenzusammensetzung außerdem einen Polymerisationsinitiator aufweist.

**13.** Verwendung des Tintenstrahl-Tintensets nach einem der Ansprüche 1 bis 12 zum Auftragen auf ein Aufzeichnungsmedium, das ein Basispapier und eine Beschichtungsschicht, die ein anorganisches Pigment enthält, aufweist, um eine Abbildung zu erzeugen.

**14.** Abbildungserzeugungsverfahren aufweisend:

Auftragen der Tintenzusammensetzung des Tintenstrahl-Tintensets nach einem der Ansprüche 1 bis 13 auf ein Aufzeichnungsmedium, das ein Basispapier und eine Beschichtungsschicht, die ein anorganisches Pigment enthält, aufweist, um mittels des Tintenstrahlverfahrens eine Abbildung zu erzeugen; und
Auftragen der Behandlungsflüssigkeit des Tintenstrahl-Tintensets auf das Aufzeichnungsmedium.

15. Abbildungserzeugungsverfahren nach Anspruch 14, wobei die Tintenzusammensetzung aufgetragen wird, nachdem die Behandlungsflüssigkeit auf das Aufzeichnungsmedium aufgetragen wurde.

## Revendications

1. Jeu d'encre pour jet d'encre, comprenant :

   une composition d'encre comprenant de l'eau, un colorant, des particules polymères présentant une température de transition vitreuse supérieure ou égale à 90 °C, une amine organique et un sel inorganique, et
   un liquide de traitement qui comprend un composé acide et entraîne une agrégation lorsque le liquide de traitement entre en contact avec la composition d'encre.

2. Jeu d'encre pour jet d'encre selon la revendication 1, dans lequel l'amine organique est un amino-alcool.

3. Jeu d'encre pour jet d'encre selon la revendication 1 ou 2, dans lequel l'amine organique est une triéthanolamine.

4. Jeu d'encre pour jet d'encre selon l'une quelconque des revendications 1 à 3, dans lequel le sel inorganique est au moins un élément sélectionné parmi le groupe consistant en un sel de métal alcalin et un sel de métal alcalino-terreux.

5. Jeu d'encre pour jet d'encre selon l'une quelconque des revendications 1 à 4, dans lequel le sel inorganique est au moins un élément sélectionné parmi le groupe consistant en un sel de chlorhydrate et un sel de nitrate.

6. Jeu d'encre pour jet d'encre selon l'une quelconque des revendications 1 à 5, dans lequel le sel inorganique est au moins un élément sélectionné parmi le groupe consistant en du chlorure de lithium, du nitrate de lithium, du chlorure de potassium et du nitrate de potassium.

7. Jeu d'encre pour jet d'encre selon l'une quelconque des revendications 1 à 6, dans lequel les particules polymères présentent une température de transition vitreuse supérieure ou égale à 120 °C.

8. Jeu d'encre pour jet d'encre pour jet d'encre selon l'une quelconque des revendications 1 à 7, dans lequel un pH de la composition d'encre est compris dans l'intervalle allant de 7,5 à 13,0 et un pH du liquide de traitement est compris dans l'intervalle allant de 0,1 à 4,0.

9. Jeu d'encre pour jet d'encre selon l'une quelconque des revendications 1 à 8, dans lequel un pH de la composition d'encre est compris dans l'intervalle allant de 7,5 à 13,0 et un pH du liquide de traitement est compris dans l'intervalle allant de 0,1 à 0,5.

10. Jeu d'encre pour jet d'encre selon l'une quelconque des revendications 1 à 9, dans lequel la composition d'encre comprend en outre un composé polymérisable.

11. Jeu d'encre pour jet d'encre selon la revendication 10, dans lequel le composé polymérisable est un composé (méth)acrylamide représenté par la formule suivante (1) :

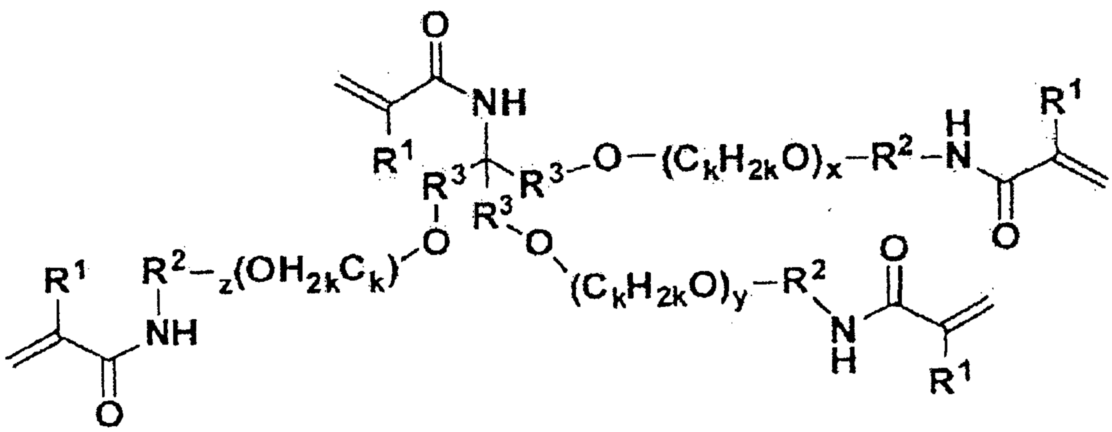

dans lequel, dans la formule (1), $R^1$ représente un atome d'hydrogène ou un groupe méthyle ; $R^2$ représente un groupe alkylène à chaîne droite ou ramifié présentant de 2 à 4 atomes de carbone, doté d'une structure dans laquelle l'atome d'oxygène et l'atome d'azote, lesquels sont liés sur les deux extrémités de $R^2$, ne sont pas liés au même atome de carbone dans $R^2$ ; $R^3$ représente un groupe de liaison divalent ; k représente 2 ou 3 ; chacun de x, y et z représente indépendamment un entier de 0 à 6, et la somme x+y+z équivaut à 0 à 18.

**12.** Jeu d'encre pour jet d'encre selon la revendication 11, dans lequel la composition d'encre comprend en outre un initiateur de polymérisation.

**13.** Utilisation du jeu d'encre pour jet d'encre selon l'une quelconque des revendications 1 à 12, pour une application sur un support d'enregistrement comprenant un papier de base et une couche de revêtement contenant un pigment inorganique pour former une image.

**14.** Procédé de formation s'image comprenant :

l'application de la composition d'encre du jeu d'encre pour jet d'encre selon l'une quelconque des revendications 1 à 13 sur un support d'enregistrement comprenant un papier de base et une couche de revêtement contenant un pigment inorganique pour former une image par un procédé à jet d'encre, et
appliquer le liquide de traitement du jeu d'encre pour jet d'encre sur le support d'enregistrement.

**15.** Procédé de formation d'image selon la revendication 14, dans lequel la composition d'encre est appliquée après que le liquide de traitement a été appliqué sur le support d'enregistrement.

FIG.1

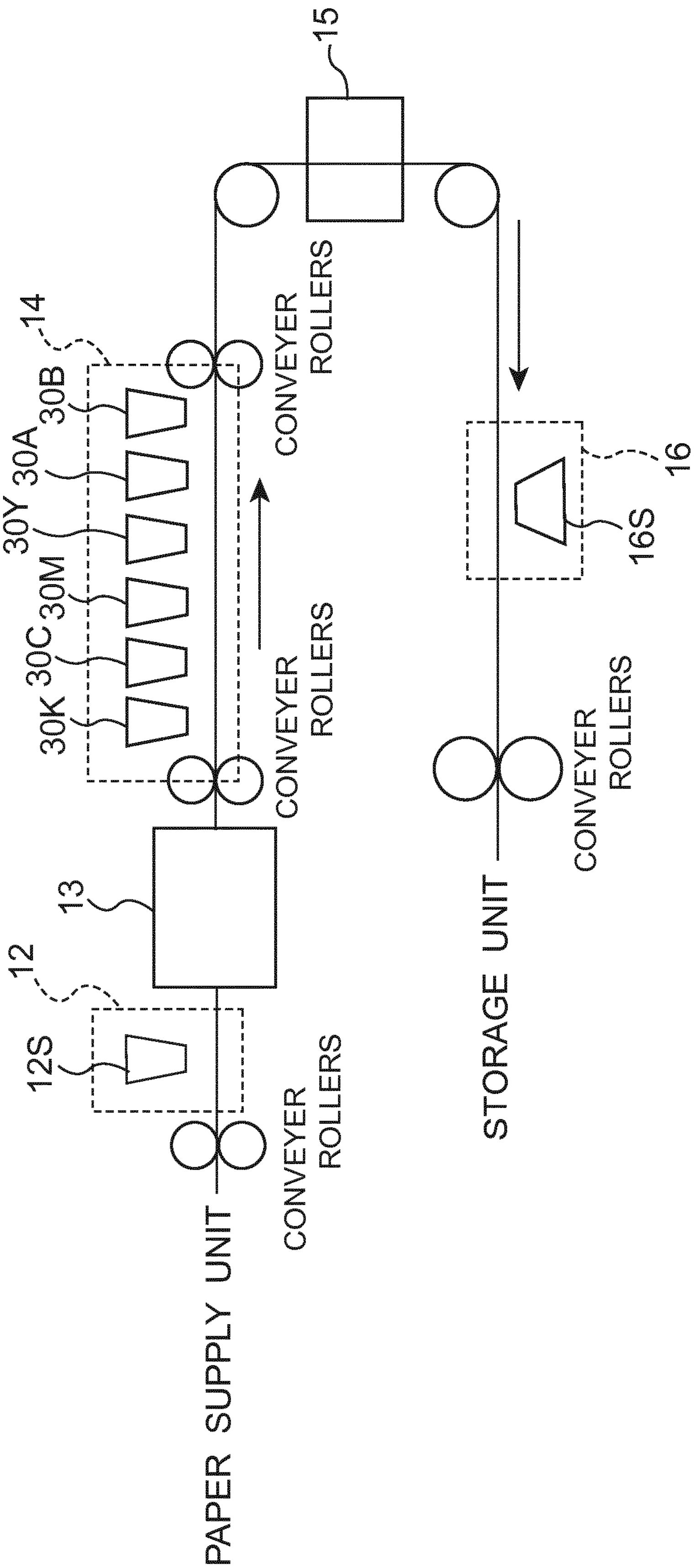
PAPER SUPPLY UNIT
CONVEYER ROLLERS
12S
12
13
CONVEYER ROLLERS
30K
30C
30M
30Y
30A
30B
14
CONVEYER ROLLERS
CONVEYER ROLLERS
15
16
16S
CONVEYER ROLLERS
STORAGE UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012250477 A
- JP 2011046872 A
- JP 2012196822 A
- JP 2010064480 A
- JP 2011068085 A
- JP 2011178029 A
- JP 2001115066 A
- JP 2001335714 A
- JP 2002249677 A
- JP 2001181549 A
- JP 2007169418 A
- JP 2013018846 A
- JP 2009185079 A
- WO 2008102615 A
- JP 2011042150 A
- JP 2013001854 A
- JP 2011202117 A
- JP 2006091780 A
- JP 2003306623 A
- JP 54059936 A
- JP 2006188043 A
- JP 2012011585 A
- JP 2011184628 A


### Non-patent literature cited in the description


- **J. BRANDRUP ; E. H. IMMERGUT.** Polymer Handbook. Wiley-Interscience, 1989